# EUROPEAN PATENT SPECIFICATION

(11) **EP 4 060 888 B1**
(45) Date of publication and mention of the grant of the patent: **30.04.2025**
(21) Application number: 22161585.9
(22) Date of filing: 11.03.2022
(51) Int. Cl.: H02P 8/26, H02P 8/20, H02P 8/30, F25B 41/35, H02K 11/215, H02K 1/14, H02K 1/278, H02K 5/128, H02K 7/14, H02K 21/16, F16K 31/04, F16K 37/00

(54) **MOTOR OPERATED VALVE CONTROL DEVICE AND A MOTOR OPERATED VALVE CONTROL PROGRAM**
MOTORBETRIEBENE VENTILSTEUERVORRICHTUNG UND COMPUTERPROGRAMM FÜR MOTORBETRIEBENE VENTILSTEUERVORRICHTUNG
DISPOSITIF DE COMMANDE DE SOUPAPE MOTORISÉ ET PROGRAMME DE COMMANDE DE SOUPAPE MOTORISÉ

(30) Priority: 15.03.2021 JP 2021041228
(43) Date of publication of application: 21.09.2022
(73) Proprietor: TGK Co., Ltd., Hachioji-shi, Tokyo 193-0942 (JP)
(72) Inventor: YUASA, Tomohiro, Tokyo 193-0942 (JP); SAEKI, Shinji, Tokyo 193-0942 (JP); KANEKO, Yasuaki, Tokyo 193-0942 (JP); MIZUSHIMA, Yorinao, Tokyo 193-0942 (JP)
(74) Representative: Meissner Bolte Nürnberg

(56) References cited:
- CN-A- 107 269 909
- US-A1- 2014 034 029
- US-A1- 2016 313 037
- US-A1- 2017 234 424
- US-B2- 8 040 085

## Description

The present invention relates to a motor operated valve control device connected with a motor operated valve and to a motor operated valve control program.

An automotive air conditioner typically includes a compressor, a condenser, an expander, an evaporator, and so forth arranged in a refrigeration cycle. In refrigeration cycles, various control valves for controlling the flow of fluid, such as expansion valves serving as expanders, are used. With recent increase in electric vehicles, motor operated valves including motors as driving units have been increasingly widely employed.

As an example of such motor operated valves, a motor operated valve including a magnetic sensor for detecting a valve opening degree is known (refer to JP 2018-135908 A, for example). A valve element is formed at one end of an actuating rod that rotates with a rotor, and a magnet (sensor magnet) is provided on the other end thereof. A magnetic sensor is arranged to axially face the sensor magnet. The rotational movement of the rotor is converted into the axial movement of the valve element by a feed screw mechanism. A change of magnetic flux with the rotation of the rotor is sensed by the magnetic sensor, which enables detection of the rotation angle of the sensor magnet and thus the position of the valve element in the axial direction, and calculation of the valve opening degree.

A reference position, which is a reference for control, is set for the actuating rod that moves up and down in the motor operated valve. When the rotor continues rotation in the valve closing direction and reaches the reference position, which is also called an "origin", the rotation of the rotor is stopped by a stopper (refer to JP 2020-204344 A, for example).

### Related Art List

### (1) JP 2018-135908 A

### (2) JP 2020-204344 A

US 8 040 085 B2 discloses a brushless motor apparatus including a fixedly arranged starter, a rotor rotated in a manner sequentially excited by a plurality of excitation patterns, a magnetic-pole-position detecting magnet fixed to the rotor and having twice the number of poles of the rotor, in the position detecting element arranged opposite to the magnetic-pole-position detecting magnet and detecting the position of magnetic poles of the rotor. The apparatus further includes a motor drive circuit serving as a control such that when the stator is excited with a different excitation pattern between regular excitation patterns on normal operation at the time of phase matching carried out upon actuation of a power source, the rotation angle of the rotor is one-half the rotation angle corresponding to the regular excitation pattern.

US 2017/0234424 A1 discloses a method in which a butting control is performed at a low temperature at which an oil temperature of an automatic transmission is equal to or lower than a predeterminded value, a driving condition changing process is performed. In the driving condition changing process, an execution period from a starting of the butting control to an ending of the butting control is divided into a plurality of sections on the basis of a rotation angle of a motor. By making a torque of the motor greater and a rotation speed higher in starting-section than in the ending-section, the execution period of the butting control is made short. By making the torque of the motor smaller and the rotation speed lower in the ending-section than in the starting-section, an amount of deformation of a component is made smaller when a part of a component is butted against a limit position so that a reference position can be learned accurately.

Because electric vehicles are quiet, the slightest machine sound coming from a motor operated valve is easily perceived. Among various machine sounds from motor operated valve, impact noise produced by a stopper when a rotor is being moved near the reference position is particularly likely to be recognized as abnormal noise.

A chief object of the present invention is to provide a technology for improving the quietness of motor operated valves.

**The object of the present invention is solved by subject matter as defined in any of the independent claims 1, 7 or 8.**

A motor operated valve control device according to the present invention is connected with a motor operated valve that adjusts a valve opening degree by rotating a rotor.

The device includes a rotation detecting unit for detecting a rotation angle of the rotor, and a rotation control unit for moving the rotor toward a predetermined stop position by providing instructions on a rotating speed and a rotating direction of the rotor.

In control of movement of the rotor to the stop position, the rotation control unit lowers the rotating speed of the rotor when a difference between a reference angle value indicating a rotation angle at a reference position of the rotor and a detected rotation angle of the rotor is smaller than a first threshold, and increases the rotating speed of the rotor after lowering the rotating speed of the rotor, when the difference between the detected rotation angle of the rotor and the reference angle value is equal to or larger than the first threshold.

A motor operated valve control program according to the present invention causes a computer to implement: a function of detecting a rotation angle of a rotor of a motor operated valve; a function of moving the rotor toward a predetermined stop position by providing instructions on a rotating speed and a rotating direction of the rotor; and a function of lowering the rotating speed of the rotor when a difference between a reference angle value indicating a rotation angle at a reference position of the rotor and a detected rotation angle of the rotor is smaller than a first threshold in control of movement of the rotor to the stop position, and after lowering the rotating speed of the rotor, increasing the rotating speed of the rotor when the difference between the detected rotation angle of the rotor and the reference angle value is equal to or larger than the first threshold.
FIG. 1 is a cross-sectional view of a motor operated valve according to the present invention;
FIGS. 2A and 2B illustrate the structures of a stator and around the stator;
FIGS 3A to 3D illustrate the structure of a rotor;
FIG. 4 is a schematic view illustrating the relation of a magnetic sensor, a sensor magnet, and lines of magnetic force produced by the sensor magnet;
FIG. 5 is a plan view of the sensor magnet;
FIG. 6 is a graph illustrating the relation between a sensed angle of the sensor magnet and a sensor output;
FIG. 7 is a graph illustrating the relation between an angle value and steps;
FIG. 8 is a schematic diagram of a range of movement of the rotor;
FIG. 9 is a functional block diagram of a motor operated valve control device;
FIG. 10 is a flowchart of processes in an initialization process;
FIG. 11 is a first conceptual diagram illustrating the relation between an instruction direction and a sensed angle during synchronous upward movement;
FIG. 12 is a second conceptual diagram illustrating the relation between the instruction direction and the sensed angle during synchronous upward movement;
FIG. 13 is a flowchart illustrating processes in an origin searching process in S12 of FIG. 10;
FIG. 14 is a first conceptual diagram illustrating the relation between the instruction direction and the sensed angle during an origin searching process;
FIG. 15 is a second conceptual diagram illustrating the relation between the instruction direction and the sensed angle during the origin searching process;
FIG. 16 is a first conceptual diagram illustrating the relation between the instruction direction and the sensed angle during resynchronization;
FIG. 17 is a second conceptual diagram illustrating the relation between the instruction direction and the sensed angle during resynchronization; and
FIG. 18 is a conceptual diagram illustrating the relation between the instruction direction and the sensed angle during initial position setting.

An embodiment of the invention will now be described.

The embodiment of the present invention will be described in detail with reference to the drawings. In the description below, for convenience of description, the positional relationship in each structure may be expressed with reference to how the structure is depicted in the drawings. In the following embodiment and modifications thereof, components that are substantially the same will be designated by the same reference numerals and redundant description thereof may be omitted as appropriate.

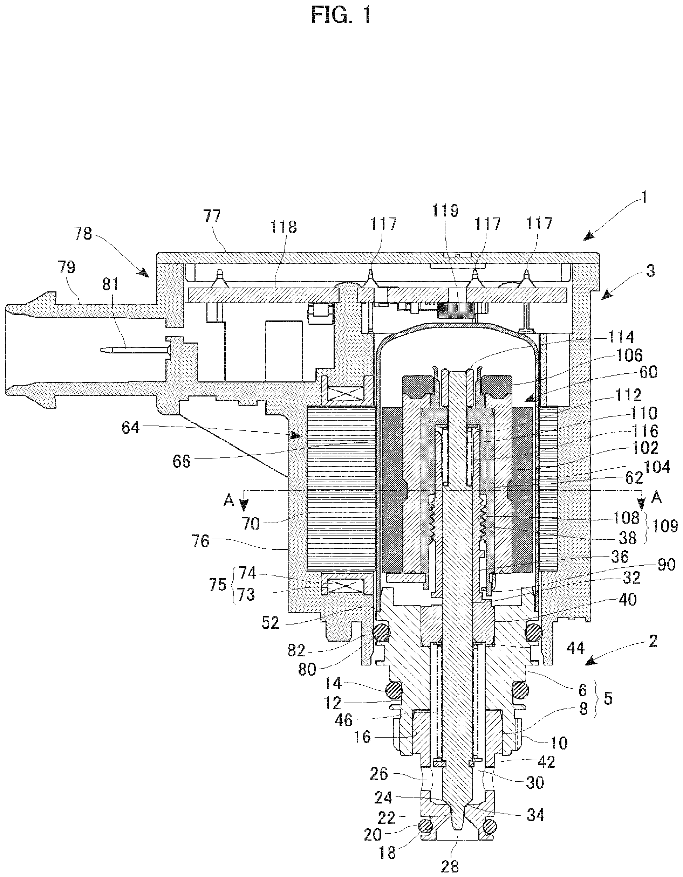

FIG. 1 is a cross-sectional view of a motor operated valve according to the invention.

The motor operated valve 1 is applied to a refrigeration cycle of an automotive air conditioner, which is not illustrated. The refrigeration cycle includes a compressor for compressing a circulating refrigerant, a condenser for condensing the compressed refrigerant, an expansion valve for throttling and expanding the condensed refrigerant and delivering the resulting spray of refrigerant, and an evaporator for evaporating the spray of refrigerant to cool the air in a vehicle interior using the evaporative latent heat. The motor operated valve 1 functions as the expansion valve in the refrigeration cycle.

The motor operated valve 1 is constituted by an assembly of a valve unit 2 and a motor unit 3. The valve unit 2 includes a body 5 containing a valve section. The body 5 functions as a "valve body". The body 5 includes a first body 6 and a second body 8, which are coaxially mounted. The first body 6 and the second body 8 are both made of stainless steel (hereinafter referred to as "SUS"). The second body 8 has a valve seat 24, and a material excellent in abrasion resistance is therefore selected for the second body 8. The first body 6 is more weldable than the second body 8, and the second body 8 is more workable than the first body 6.

The first body 6 has a stepped cylindrical shape with an outer diameter decreasing in the downward direction. An upper end portion of the first body 6 is slightly reduced in outer diameter, which forms a step serving as a stopper portion 52. An external thread 10 for mounting the motor operated valve 1 on a piping body, which is not illustrated, is formed on an outer face of a lower portion of the first body 6. A pipe extending from the condenser side, a pipe connected with the evaporator, and the like are connected with the piping body, details of which will not be described herein. A seal accommodating portion 12, which is an annular groove, is formed on an outer face of the first body 6 at a position a little above the external thread 10, and a seal ring 14 (O-ring) is fitted in the seal accommodating portion 12.

A recessed fitting portion 16 having a circular hole shape is formed in a lower part of the first body 6. The second body 8 has a bottomed cylindrical shape. An upper part of the second body 8 is press-fitted in the recessed fitting portion 16. A seal accommodating portion 18, which is an annular groove, is formed on an outer face of a lower portion of the second body 8, and a seal ring 20 is fitted therein. A valve hole 22 is formed to axially pass through the bottom of the second body 8, and the valve seat 24 is formed at an upper end opening portion of the valve hole 22. An inlet port 26 is formed at a lateral side of the second body 8, and an outlet port 28 is formed at the lower portion thereof. A valve chamber 30 is formed inside the first body 6 and the second body 8. The inlet port 26 and the outlet port 28 communicate with each other via the valve chamber 30.

An actuating rod 32 extending from a rotor 60 of the motor unit 3 is inserted in the body 5. The actuating rod 32 passes through the valve chamber 30. The actuating rod 32 is produced by cutting a rod material made of non-magnetic metal. A needle-like valve element 34 is formed integrally with a lower portion of the actuating rod 32. The valve element 34 touches and leaves the valve seat 24 from the valve chamber 30 side to close and open the valve section.

A guiding member 36 is provided vertically at the center of an upper part of the first body 6. The guiding member 36 is produced by cutting a tubular material made of non-magnetic metal into a stepped cylindrical shape. An external thread 38 is formed on an outer face of a middle portion in the axial direction of the guiding member 36. A lower end portion of the guiding member 36 is enlarged in diameter, and this diameter-enlarged portion 40 is press-fitted in and fixed coaxially to the middle of the upper part of the first body 6. The guiding member 36 slidably supports the actuating rod 32 along the axial direction by an inner face thereof, and rotatably and slidably supports a rotating shaft 62 of the rotor 60 by an outer face thereof.

A spring support 42 is provided on the actuating rod 32 at a position slightly above the valve element 34, and another spring support 44 is provided on a bottom portion of the guiding member 36. A spring 46 (which functions as a "biasing member") that urges the valve element 34 in a valve closing direction is provided between the spring supports 42 and 44.

The motor unit 3 is a three-phase stepping motor including the rotor 60 and a stator 64. The motor unit 3 includes a can 66 having a bottomed cylindrical shape. The rotor 60 is located inside the can 66, and the stator 64 is located outside the can 66. The can 66 is a bottomed-cylindrical member covering a space in which the valve element 34 and a mechanism for driving the valve element 48 are disposed and containing the rotor 60, and defines an internal pressure acting space (internal space) in which the pressure of the refrigerant acts and an external non pressure acting space (external space) in which the pressure of the refrigerant does not act.

The can 66 is made of non-magnetic metal (which is SUS in the present embodiment), and coaxially mounted on the first body 6 in such a manner that a lower portion thereof is mounted (outserted) around an upper end portion of the first body 6. A lower end of the can 66 is stopped by the stopper portion 52, by which the length by which the can 66 overlap with the first body 6 is limited. The boundary between the lower end of the can 66 and the first body 6 is fully welded, which is not illustrated, so that the body 5 and the can 66 are fixed to each other and sealing therebetween is achieved. A space surrounded by the body 5 and the can 66 corresponds to the aforementioned pressure acting space.

The stator 64 includes a laminated core 70, and a plurality of salient poles arranged at regular intervals on the inner side of the laminated core 70. The laminated core 70 is constituted by annular cores that are axially stacked. A bobbin 74 on which a coil 73 (electromagnetic coil) is wound is mounted on each salient pole. The coil 73 and the bobbin 74 constitute a "coil unit 75". In the present embodiment, three coil units 75 to supply three-phase currents are arranged at every 120 degrees with respect to the central axis of the laminated core 70 (details of which will be described later).

The stator 64 is integrated with a case 76 of the motor unit 3. Specifically, the case 76 is formed by injection molding (also called "insert molding" or "molding") of a corrosion-resistant resin (plastic). The stator 64 is coated with molding resin by the injection molding. The case 76 is made of the molding resin. Hereinafter, the molded stator 64 and case 76 will also be referred to as a "stator unit 78".

The stator unit 78 has a hollow structure in which the can 66 is coaxially inserted, and is mounted on the body 5. A seal accommodating portion 80, which is an annular groove, is formed on an outer face of the first body 6 at a position slightly lower than the stopper portion 52, and a seal ring 82 (O-ring) is fitted in the seal accommodating portion 80. The seal ring 82 between the outer face of the upper part of first body 6 and an inner face of lower part of the case 76 prevents an external atmosphere (such as water) from entering a gap between the can 66 and the stator 64.

The rotor 60 includes a cylindrical rotor core 102 mounted on the rotating shaft 62, a rotor magnet 104 provided along an outer face of the rotor core 102, and a sensor magnet 106 provided on an upper end face of the rotor core 102. The rotor core 102 is mounted on the rotating shaft 62. The rotor magnet 104 is magnetized with a plurality of poles in the circumferential direction. The sensor magnet 106 is also magnetized with a plurality of poles. The rotor magnet 104 and the sensor magnet 106 are produced by magnetization of a magnet part formed integrally with the rotor core 102, details of which will be described later.

The rotating shaft 62 is a bottomed cylindrical shaft mounted (outserted) around the guiding member 36 and having an open end facing downward. An internal thread 108 formed on the inner face of a lower portion of the rotating shaft 62 engages with the external thread 38 of the guiding member 36. These threads constitute a feed screw mechanism 109 that converts the rotational movement of the rotor 60 into the axial movement of the actuating rod 32. This moves the valve element 34 upward and downward in the axial direction, that is, in the opening and closing directions of the valve section.

An upper portion of the actuating rod 32 is reduced in diameter, and this reduced-diameter portion 110 extends through a bottom 112 of the rotating shaft 62. An annular stopper 114 is fixed to the leading end of the reduced-diameter portion 110. A spring 116 for biasing the actuating rod 32 downward (that is, in the valve closing direction) is provided between a base end of the reduced-diameter portion 110 and the bottom 112. In this structure, while the valve is being opened, the actuating rod 32 is moved integrally with the rotor 60, with the stopper 114 being stopped by the bottom 112. In contrast, while the valve is being closed, the spring 116 is compressed by reaction force that the valve element 34 receives from the valve seat 24. In this process, the elastic reaction force of the spring 116 presses the valve element 34 against the valve seat 24, which increases the seating performance (valve closing performance) of the valve element 34.

The motor unit 3 includes a circuit board 118 on the outer side of the can 66. The circuit board 118 is fixed inside the case 76. In the present embodiment, various circuits that function as a control unit, a communication unit, and the like are mounted on the lower face of the circuit board 118. Specifically, a drive circuit for driving the motor, a control circuit (microcomputer) for outputting control signals to the drive circuit, a communication circuit for the control circuit to communicate with an external device, a power supply circuit for supplying power to the circuits and the motor (coil), etc. The upper end of the case 76 is closed by a cap member 77. The circuit board 118 is located in a space in the case 76, below the cap member 77.

A magnetic sensor 119 is provided on a face of the circuit board 118 facing the sensor magnet 106. The magnetic sensor 119 faces the sensor magnet 106 in the axial direction via a bottom end wall of the can 66. The magnetic flux of the sensor magnet 106 changes with the rotation of the rotor 60. The magnetic sensor 119 detects the movement amount of the rotor 60 (the rotation angle of the rotor 60 in the present embodiment) by sensing the change of the magnetic flux. The control unit calculates the position of the valve element 34 and thus the valve opening degree on the basis of the movement amount of the rotor 60.

A pair of terminals 117 connected with the coil 73 extends from each of the bobbins 74 and is connected with the circuit board 118. A power supply terminal, a ground terminal, and a communication terminal (which are also collectively referred to as "connection terminals 81") extend from the circuit board 118, and are drawn through a side wall of the case 76 to the outside. A connector part 79 is formed integrally with the side of the case 76, and the connection terminals 81 are located inside the connector part 79.

A stopper 90 is formed below the rotor 60. As described in JP 2020-204344 A, the structure of the stopper 90 is known. When the actuating rod 32 reaches a valve closed position, the elastic reaction force of the spring 116 acts on the rotor 60, which stably maintains the valve closure. The stopper 90 ultimately comes into contact with a projection (stopping portion), which is not illustrated, formed as part of the guiding member 36, and the rotation of the rotor 60 in the valve closing direction is thus completely stopped. Hereinafter, the position of the rotor 60 at this point, that is, in other words, the position at which the stopper 90 comes into contact with the projection will be referred to as the "origin". In addition, in the present embodiment, the origin is a "reference position".

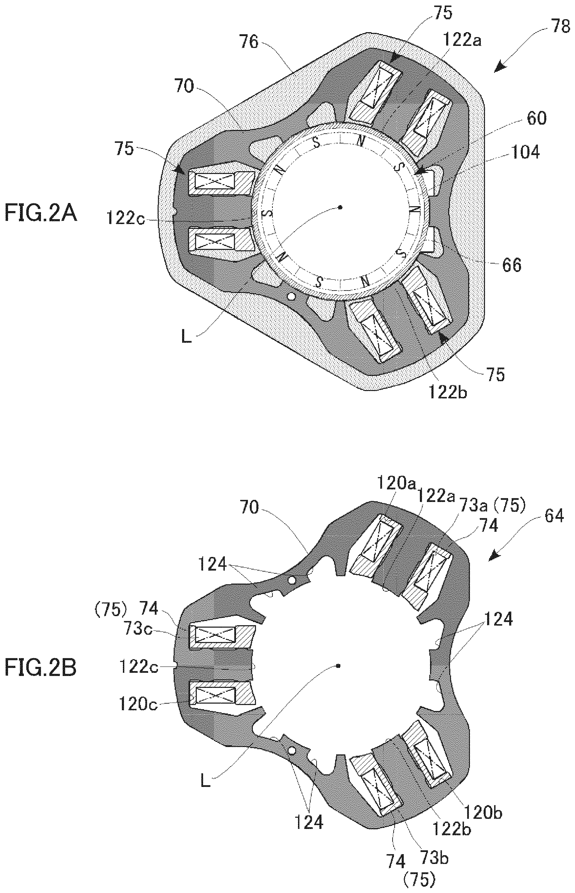

FIGS. 2A and 2B illustrate the structures of the stator 64 and around the stator 64. FIG. 2A is a cross-sectional view of the stator unit 78 taken along arrows A-A in FIG. 1. FIG. 2B illustrates the stator 64 alone (in a state before resin molding). Note that the can 66 and the rotor 60 are illustrated in FIG. 2A for reference (see two-dot chain line).

Because the motor unit 3 is a three-phase motor, the coil units 75 are provided at regular intervals around the axis L of the rotor 60 as illustrated in FIG. 2A. As also illustrated in FIG. 2B, slots 120a to 120c (collectively referred to as "slots 120" when the slots need not be distinguished from each other) are formed at intervals of 120 degrees with respect to the axis L in the inner side of the laminated core 70. Salient poles 122a to 122c (collectively referred to as "salient poles 122") protruding radially inward from the centers of the respective slots 120 are formed, and a U-phase coil 73a, a V-phase coil 73b, and a W-phase coil 73c (collectively referred to as "coils 73") are mounted on the salient poles 122a to 122c, respectively. Slits 124 each having a U-shaped cross section are formed between adjacent slots 120 to optimize magnetic paths.

The rotor magnet 104 faces the salient poles 122a to 122c with the can 66 therebetween. While the magnet 104 is magnetized with ten poles as illustrated in FIG. 2A in the present embodiment, the number of poles may be set as appropriate.

Next, the structures of the magnets of the rotor 60 will be described in detail.

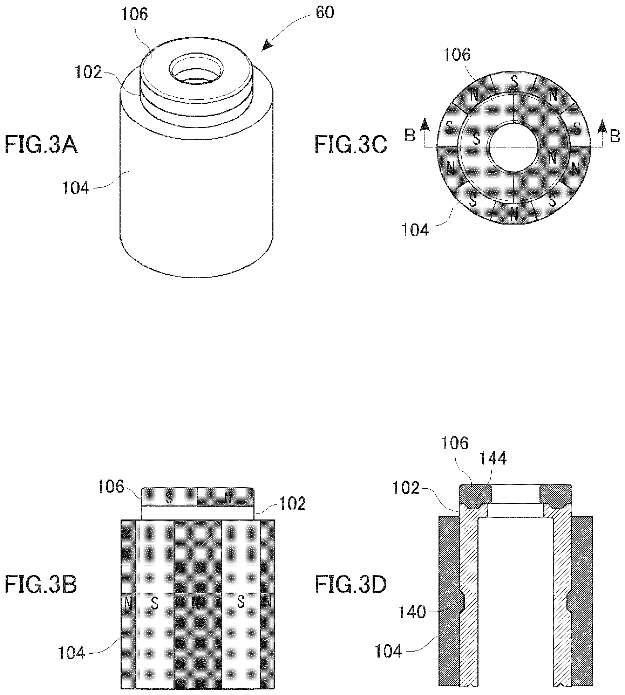

FIGS. 3A to 3D illustrate the structure of the rotor 60. FIG. 3A is a perspective view, FIG. 3B is a front view, FIG. 3C is a plan view, and FIG. 3D is a cross-sectional view taken along arrows B-B in FIG. 3C. In FIGS. 3B and 3C, "N" represents a north pole, and "S" represents a south pole. In FIGS. 3A to 3D, for convenience of explanation, the rotating shaft 62 (see FIG. 1) is not illustrated.

The rotor 60 includes the rotor magnet 104 along the outer face of the rotor core 102, and the sensor magnet 106 at an axial end of the rotor core 102 (FIGS. 3A and 3D). The rotor magnet 104 has a cylindrical shape, and is magnetized with ten poles along an outer circumferential face (FIGS. 3B and 3C). In contrast, the sensor magnet 106 has an annular shape, and is magnetized with two poles on a flat face.

As illustrated in FIG. 3D, an inner face of the rotor magnet 104 is fitted to an annular groove 140, and a lower face of the sensor magnet 106 is fitted to an annular groove 144. Thus, the annular groove 140 functions as an anti-falling structure for preventing the rotor magnet 104 from dropping from the rotor core 102. Similarly, the annular groove 144 functions as an anti-falling structure for preventing the sensor magnet 106 from dropping from the rotor core 102.

Next, a method for detecting the rotation angle of the rotor 60 by the magnetic sensor 119 on the basis of the structures described above will be explained. In the following description, the up-down direction in FIG. 1 will be referred to as the "opening and closing direction" or "upward and downward"

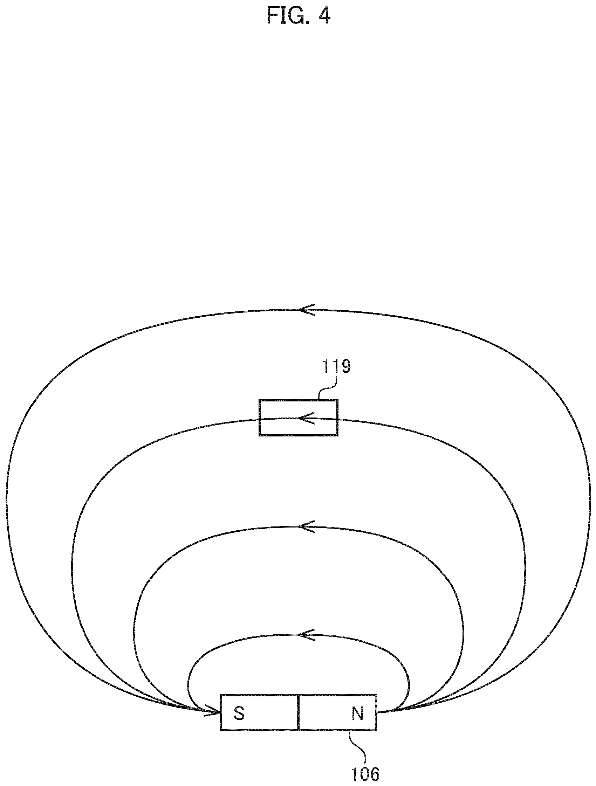

FIG. 4 is a schematic view illustrating the relation of the magnetic sensor 119, the sensor magnet 106, and the lines of magnetic force produced by the sensor magnet 106.

FIG. 4 is a schematic view of the magnetic sensor 119 and the sensor magnet 106 as viewed from the side. As illustrated in FIG. 4, the lines of magnetic force are produced from the north pole (N) to the south pole (S) of the sensor magnet 106 (permanent magnet). The magnetic sensor 119 located right above the sensor magnet 106 is a rotary sensor having a known configuration for detecting the lines of magnetic force produced by the sensor magnet 106. The magnetic sensor 119 detects the rotation angle of the sensor magnet 106 (rotor 60) on the basis of the directions of the lines of magnetic force (details of which will be described later). Note that, in the present embodiment, description will be made on the assumption that the magnetic sensor 119 can detect the rotation angle of the sensor magnet 106, but that the magnetic sensor 119 cannot directly detect the distance to the sensor magnet 106, that is, in other words, the amount of movement of the actuating rod 32 in the opening and closing direction.

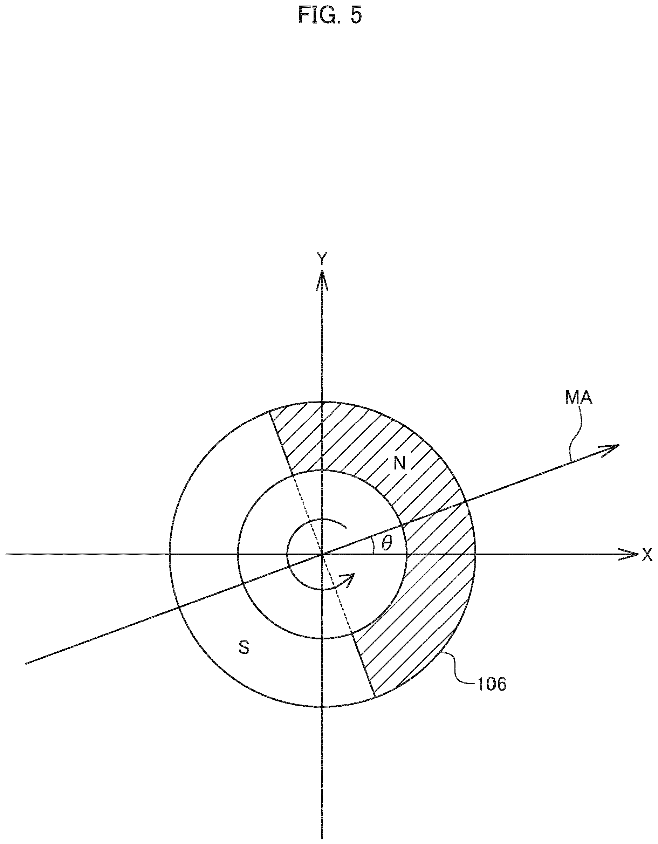

FIG. 5 is a plan view of the sensor magnet 106.

A driving current is caused to flow in the coils 73 of the stator 64 by a method described later, which applies rotational driving force to the rotor 60. When the rotor 60 is rotated in the valve closing direction (downward) (hereinafter referred to as "downward rotation"), the actuating rod 32 (valve element 34) moves in conjunction with the rotor 60 in the valve closing direction, that is, downward in FIG. 1. When the rotor 60 is rotated in the valve opening direction (hereinafter referred to as "upward rotation"), the actuating rod 32 (valve element 34) moves in conjunction with the rotor 60 in the valve opening direction, that is, upward in FIG. 1.

The sensor magnet 106 also rotates in conjunction with the rotation of the rotor 60. With the rotation of the sensor magnet 106, the magnetic field direction MA of the sensor magnet 106 also changes. The angle between the magnetic field direction MA and the X axis when an XY coordinate system (corresponding to a horizontal plane in FIG. 1) is set as illustrated in FIG. 5 is represented by θ. The magnetic sensor 119 detects the rotation angle θ of the sensor magnet 106 by a known method for the angle sensor described in JP 2018-135908 A.

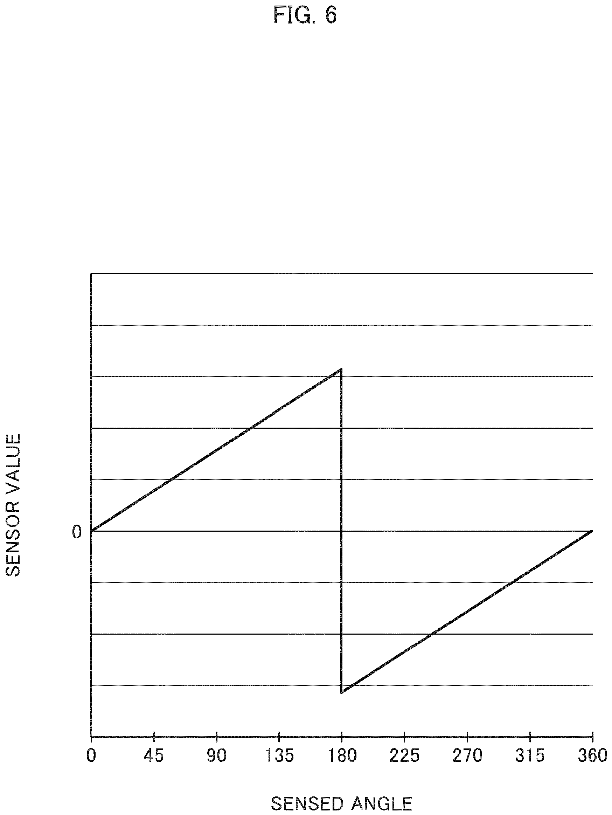

FIG. 6 is a graph illustrating the relation between a sensed angle of the sensor magnet 106 and a sensor output.

The horizontal axis represents an actual rotation angle θ of the sensor magnet 106 detected by the magnetic sensor 119 (hereinafter referred to as a "sensed angle"). The vertical axis represents an output value of the magnetic sensor 119 (hereinafter referred to as a "sensor value"). The sensor value is further normalized in a range of "a lower limit of 0 to an upper limit TA" by the magnetic sensor 119. The upper limit TA can be set to any value. As shown in FIG. 6, the magnetic sensor 119 outputs the sensor value in a saw-tooth like waveform in association with the sensed angle. Hereinafter, a value obtained by normalizing the sensor value in the aforementioned range will be referred to as an "angle value". The control circuit can detect the sensed angle, that is, the actual rotation angle of the sensor magnet 106 on the basis of the angle value.

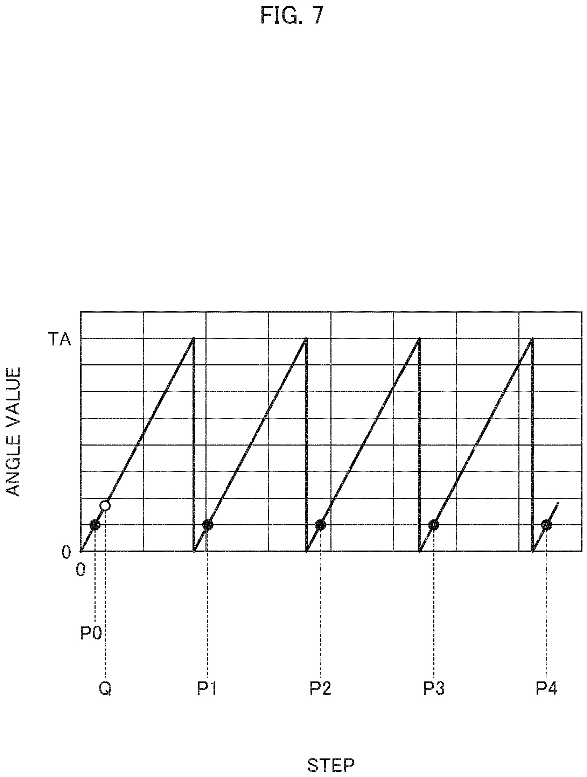

FIG. 7 is a graph illustrating the relation between the angle value and steps.

In the present embodiment, while the valve element 34 is moved from an uppermost point (valve open) to a lowermost point (valve closed), the rotor 60 makes a total of four rotations. Although details will be described later, the control circuit rotates the rotor 60 by changing the driving current supplied to the three-phase coils 73 and changing the magnetic field direction of the coils 73. In the present embodiment, the control circuit rotates the rotor 60 in units of u1 degrees (details of which will be described later). Hereinafter, this unit rotation amount will be referred to as a "step". According to (360 degrees) × (4 rotations) / (u1 degrees) = 1440/u1, the control circuit instructs the rotor 60 to make rotations corresponding to a total of (1440/u1) steps within the operation range of the actuating rod 32. The angle value changes four times between 0 and TA for four rotations of the rotor 60.

The control circuit causes a driving current of a predetermined level to flow in the U-phase coil 73a. In this case, a driving current of the predetermined level is similarly caused to flow in each of the V-phase coil 73b and the W-phase coil 73c. The driving currents are caused to flow in the coils 73 to set the rotation angle for instruction to the rotor 60. Hereinafter, the direction of the magnetic field produced from the coils 73 will be referred to as an "instruction direction". A combination of current values of the driving currents applied to the U-phase coil 73a, the V-phase coil 73b, and the W-phase coil 73c will be referred to as an "excitation pattern". In the present embodiment, N kinds of excitation patterns are present. A change from one excitation pattern to a next excitation pattern corresponds to an instruction to rotate by "one step", that is, by the unit rotation amount.

When the excitation pattern is changed, that is, when the excitation pattern is changed by one step at a time, the instruction direction changes. In synchronization with the change in the instruction direction, the rotor 60 rotates and the sensed angle θ also changes. After the excitation pattern is changed, the control circuit calculates the sensed angle θ from the angle value detected by the magnetic sensor 119, and thus can determine whether or not the sensed angle θ (the actual rotation angle of the rotor 60 detected by the magnetic sensor 119) follows the instruction direction (the rotation angle on which the rotor 60 is instructed).

Hereinafter, a state in which the sensed angle follows the instruction direction will be referred to as "synchronous", and a state in which the sensed angle does not follow the instruction direction will be referred to as "desynchronized".

N pattern IDs are assigned to the respective excitation patterns. The driving current values of the U-phase coil 73a, the V-phase coil 73b, and the W-phase coil 73c in an excitation pattern with a pattern ID = N1 (hereinafter referred to as "excitation pattern (N1)") are presented by IU(N1), IV(N1), and IW(N1), respectively. Thus, the excitation pattern (N1) means the combination of {IU(N1), IV(N1), IW(N1)}. Because the driving currents IU(N1), IV(N1), and IW(N1) change the magnetic field balance of the coils 73, the instruction direction can be determined by the driving currents.

When the control circuit changes the excitation pattern (N1) to an excitation pattern (N1+1), that is, {IU(N1+1), IV(N1+1), IW (N1+1)}, the direction (instruction direction) of the magnetic field produced from the three coils 73 changes, and the rotor 60 rotates upward by the unit rotation amount accordingly. When the control circuit changes the excitation pattern (N1) to an excitation pattern (N1-1), the rotor 60 rotates downward by the unit rotation amount. N (one cycle of) excitation patterns correspond to N steps.

When the control circuit advances the excitation pattern by N steps, the rotor 60 rotates F degrees. To cause the rotor 60 to make one rotation (rotation by 360 degrees), the excitation pattern needs to be changed by (360/F) the cycle. A sensed angle of 360 degrees (one rotation) corresponds to N×(360/F) steps.

The excitation pattern is changed to change the instruction direction, and rotational driving force is applied to the rotor 60 with the change in the instruction direction. After the valve element 34 reaches the valve seat 24, the elastic reaction force of the spring 116 stably maintains the valve closed state of the rotor 60.

In the present invention, the position of the rotor 60 when the stopper 90 comes in contact with the guiding member 36 (technically speaking, the projection of the guiding member 36) is assumed to be the origin (reference position), and the control circuit records the angle value and the excitation pattern at this point as "origin information (reference information)". Hereinafter, the contact of the stopper 90 with the projection of the guiding member will be referred to as "rotation restriction". In addition, contact noise made when the stopper 90 comes in contact with the projection will be referred to as "impact noise".

Owing to variations in manufacturing, the origin information varies from a motor operated valve 1 to another. The circuit board 118 includes a nonvolatile memory. The position of the origin of each motor operated valve 1 is checked during manufacturing, and the origin information specific to the motor operated valve 1 is recorded in the nonvolatile memory.

In one example, assume that the angle value in the origin information of a motor operated valve 1a is "15". Also assume that the angle value in the origin information of another motor operated valve 1b is "23". Because motor operated valves 1 vary individually, the origin information is set for each motor operated valve 1.

Assume that an initialization command is transmitted from outside to the motor operated valve 1a. The control circuit of the circuit board 118 receives various commands including the initialization command from a master device (external device). Upon receiving the initialization command, the control circuit searches for the origin while rotating the rotor 60 gradually downward rotation. The control circuit detects the angle value by the magnetic sensor 119 during the downward rotation. The control circuit searches for the reference position by comparing the angle value in the origin information and the angle value detected by the magnetic sensor 119. For example, the control circuit of the motor operated valve 1a can determine that the rotor 60 has reached the origin when the angle value detected during the downward rotation is "15". Similarly, the control circuit of the motor operated valve 1b can determine that the rotor 60 may have reached the origin when the angle value detected during the downward rotation is "23". Details of the origin search will be described later.

The control circuit adjusts the amount of movement of the actuating rod 32, that is the valve opening degree of the motor operated valve 1 by specifying the number of steps corresponding to the rotation amount of the rotor 60 with respect to the origin (valve closed position).

As described above, the origin information includes the angle value and the excitation pattern at the origin. In the case of FIG. 7, the angle value and the excitation pattern at the origin P0 are recorded as the origin information in the nonvolatile memory. When the valve element 34 is moved from the uppermost point to the lowermost point, the rotor 60 makes a total of four rotations, and the angle value equal to that in the origin information is detected four times. In FIG. 7, this angle value is detected at points P1, P2, P3, and P4. Hereinafter, the actual origin P0 will be referred to as a "true origin" or simply as an "origin", and the points P1, P2, P3, and P4 at which the origin information is the same as that at the origin P0 but are not actually the origin will each be referred to as a "false origin".

In the present embodiment, when the initialization command is transmitted, the control circuit sets the rotor 60 at an initial position Q, which is a position reached by slight upward rotation in the opening direction from the origin P0. The initial position Q corresponds to a "stop position". The control circuit first sets the rotor 60 at the initial position Q, and then provides instructions on the rotation amount and the rotating direction of the rotor 60 to adjust the valve opening degree. Thereafter, the initial position Q is the reference point for control. The reason why the origin P0 and the initial position Q are set to different positions from each other will be described later.

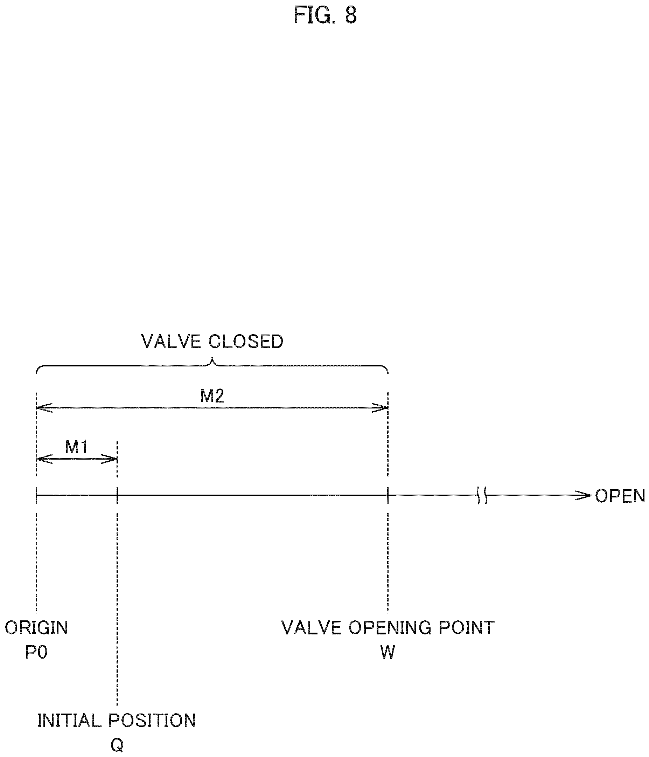

FIG. 8 is a schematic diagram of a range of movement of the rotor 60.

The rightward direction in FIG. 8 corresponds an opening direction an opening direction (upward direction) of the rotor 60, and the leftward direction in FIG. 8 corresponds to a closing direction (downward direction) thereof. The origin P0 is a limit position at which the stopper 90 is subjected to rotation restriction, and the rotor 60 cannot further rotate downward. A valve opening point W is a position reached by upward rotation of the rotor 60 by M2 steps from the origin P0. M2 in the present embodiment may be freely set. In the range from the origin P0 to the valve opening point W, the elastic reaction force of the spring 116 presses the valve element 34 against the valve seat 24, and the valve closed state is thus maintained. When the rotor 60 continues the upward rotation from the origin P0 and then passes through the valve opening point W, the valve element 34 leaves the valve seat 24 and becomes in the valve open state. As the rotor 60 continues the upward rotation after passing through valve opening point W, the valve opening degree gradually increases, and the flow rate from the inlet port 26 to the outlet port 28 increases.

The initial position Q is a position reached by upward rotation of the rotor 60 by M1 steps from the origin P0. M1 in the present embodiment may be freely set. Note that M1 is smaller than M2 (M1 < M2). Thus, when the rotor 60 is at the initial position Q, the valve is in the closed state.

The initial position Q may be set as the origin P0; in this case, however, the stopper 90 is too close to the projection, which is more likely to cause impact noise. For example, when the rotor 60 at the origin P0 is started to move, the rotor 60 wobbles, and is likely to cause impact noise. Alternatively, when the rotor 60 at the origin P0, the vibration of a vehicle may be transmitted to the rotor 60, which may cause impact noise. In the present embodiment, the initial position Q is therefore away from the origin P0, so that a space (allowance) is present between the stopper 90 and the projection to reduce impact noise.

As described above, because the origin P0 is a position specific to each motor operated valve 1, the initial position Q also varies from one motor operated valve 1 to another. Upon receiving the initialization command, the control circuit sets the rotor 60 at the initial position Q corresponding to upward rotation by M1 steps from the origin P0. Hereinafter, moving the rotor 60 to the initial position Q will be referred to as an "initialization process".

The following description will focus on the initialization process.

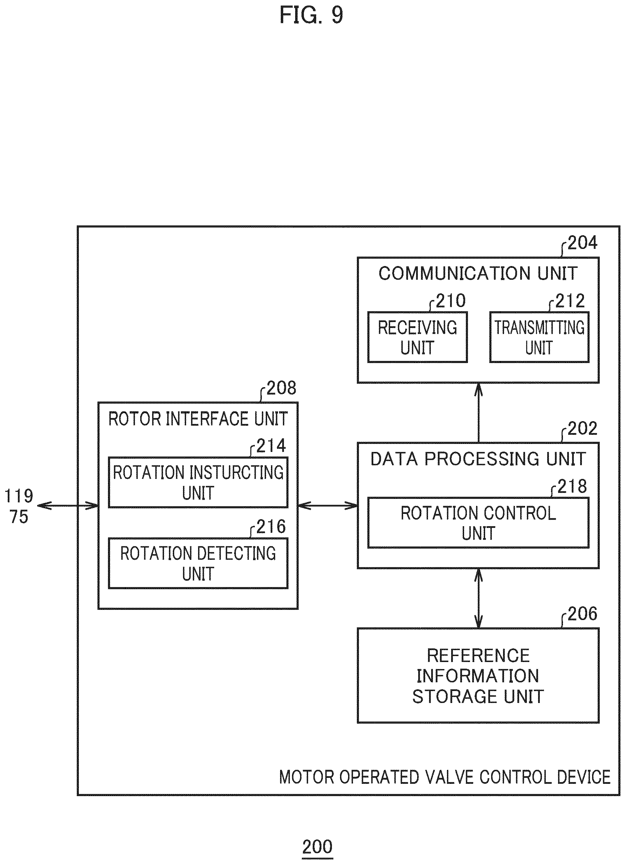

FIG. 9 is a functional block diagram of a motor operated valve control device 200.

Respective components of the motor operated valve control device 200 are implemented by hardware (control circuit) including the control circuit (microcomputer) on the circuit board 118, storage devices such as memories and storages, and wired or wireless communication lines that connect these units and devices, and software that is stored in the storage devices and supplies processing instructions to computing units. Computer programs may be constituted by device drivers, application programs, and a library that provides common functions to these programs. Blocks to be described below do not refer to configurations in units of hardware but to blocks in units of functions.

The motor operated valve control device 200 includes a data processing unit 202, a communication unit 204, a reference information storage unit 206, and a rotor interface unit 208.

The communication unit 204 functions as an interface to an external device via a connection terminal 81. The rotor interface unit 208 functions as an interface to the magnetic sensor 119 and the coil units 75. The reference information storage unit 206 stores the origin information (reference information). The reference information storage unit 206 is a storage area in the nonvolatile memory. The data processing unit 202 performs various processes on the basis of the reference information and various data obtained from the communication unit 204 and the rotor interface unit 208. The data processing unit 202 also functions as an interface of the communication unit 204, the rotor interface unit 208 and the reference information storage unit 206.

The communication unit 204 includes a receiving unit 210 that receives data and commands from external devices, and a transmitting unit 212 that transmits data to external devices.

The rotor interface unit 208 includes a rotation instructing unit 214, and a rotation detecting unit 216. The rotation instructing unit 214 outputs a driving current depending on the excitation pattern to each of the U-phase coil 73a, the V-phase coil 73b, and the W-phase coil 73c. The rotation detecting unit 216 obtains the angle value from the magnetic sensor 119.

The data processing unit 202 includes a rotation control unit 218. The rotation control unit 218 controls the rotation instructing unit 214 on the basis of the origin information. The rotation control unit 218 calculates the sensed value on the basis of the angle value. The rotation control unit 218 locates the origin P0 (reference position) and the initial position Q on the basis of the capability of following of the sensed angle.

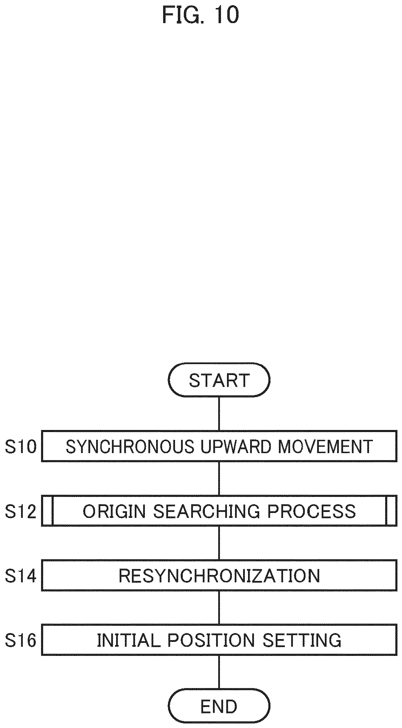

FIG. 10 is a flowchart illustrating processes in the initialization process.

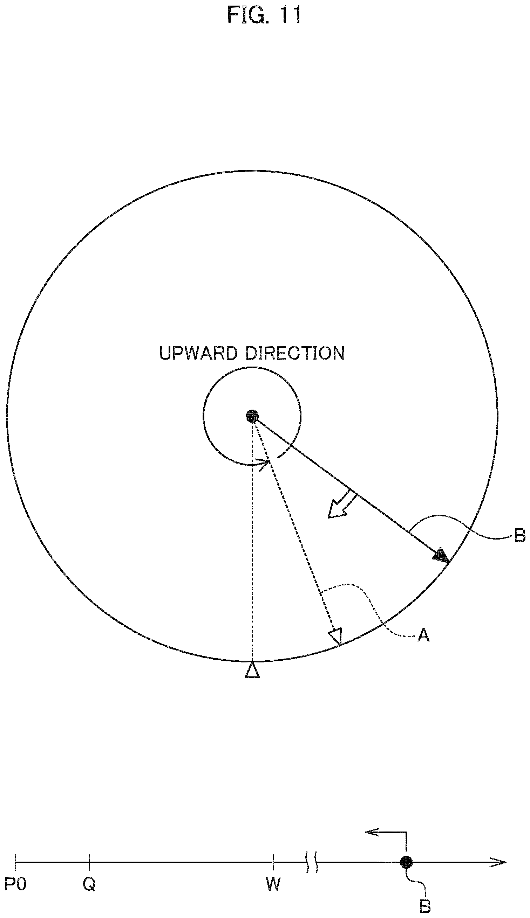

When the receiving unit 210 of the motor operated valve control device 200 has received the initialization command from an external device via the connection terminal 81, the initialization process illustrated in FIG. 10 is started. For initialization, the rotor 60 rotates upward by a predetermined amount (hereinafter referred to as "synchronous upward movement") (S10). The synchronous upward movement is a process for synchronizing the instruction direction depending on the excitation pattern and the angle value, which is the actual rotation angle of the rotor 60. When the rotor 60 starts rotating, a foreign material such as metal waste may be stuck at the feed screw mechanism 109 between the guiding member 36 and the rotor 60. The upward rotation of the rotor 60 accompanying the synchronous upward movement can release a stuck foreign material caught by the rotor 60. In addition, the synchronous upward movement applies moderate vibration to the feed screw mechanism 109, which facilitates fall of a foreign material from the feed screw mechanism 109. The synchronous upward movement will be described later with reference to FIGS. 10 and 11.

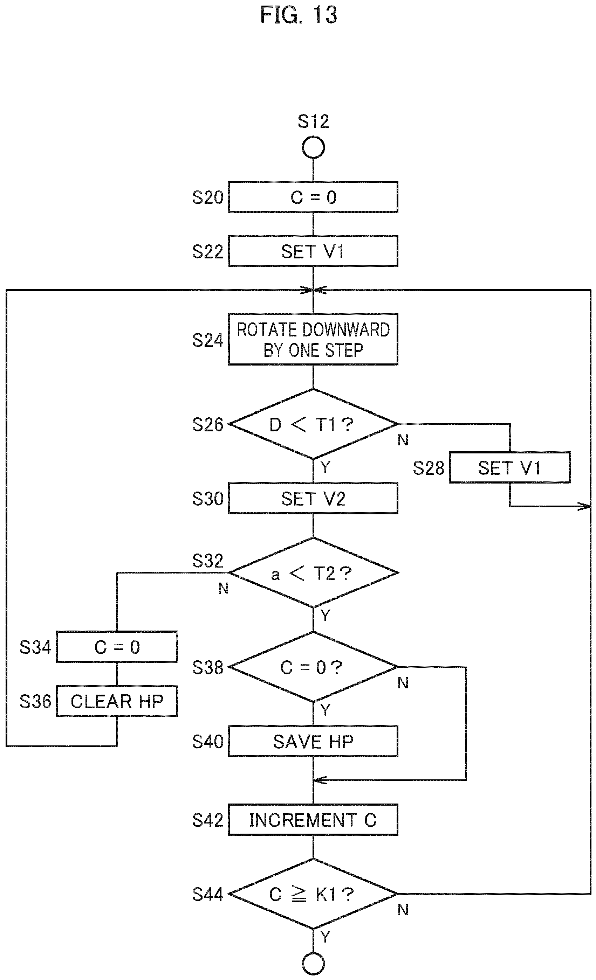

Subsequently, an "origin searching process" for moving the rotor 60 to the origin P0 is performed (S12). Before moving the rotor 60 to the initial position Q, the motor operated valve control device 200 moves the rotor 60 to the origin P0 by changing the instruction direction in the direction of downward rotation. The rotation control unit 218 locates the origin P0 on the basis of the origin information. Details of the origin searching process will be described later with reference to FIGS. 13, 14, and 15.

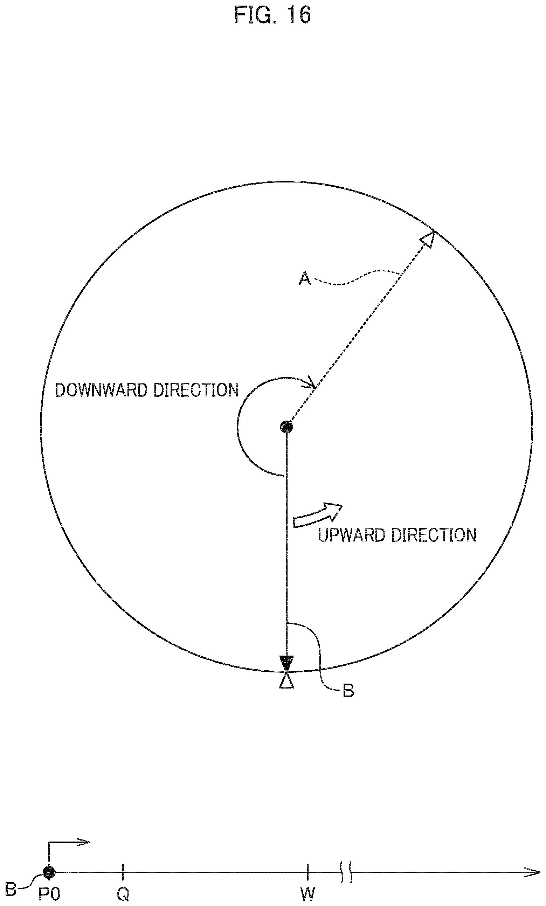

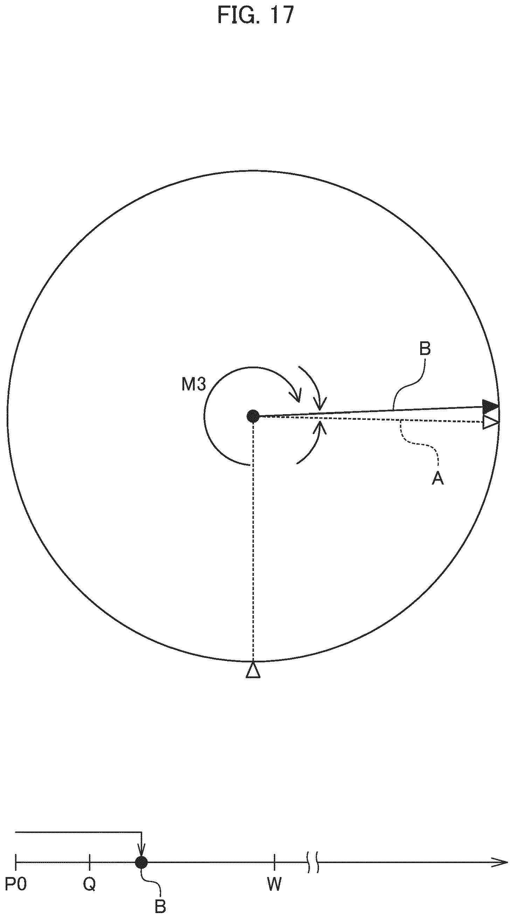

After making the rotor 60 reach the origin P0, the rotation control unit 218 first causes the rotor 60 to be desynchronized and then rotate upward, and synchronizes the sensed angle with the instruction direction again (hereinafter referred to as "resynchronization") (S14). The upward rotation during resynchronization also facilitates release and removal of a stuck foreign material in a manner similar to the synchronous upward movement. Details of resynchronization will be described later with reference to FIGS. 16 and 17.

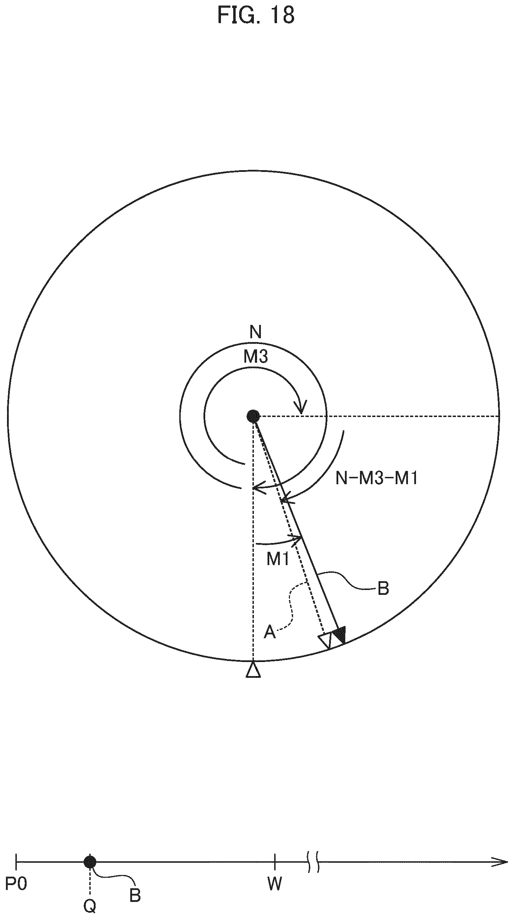

Finally, the rotation control unit 218 moves the rotor 60 to the initial position Q (hereinafter referred to as "initial position setting") (S16). Details of the initial position setting will be described later with reference to FIG. 18.

FIG. 11 is a first conceptual diagram illustrating the relation between the instruction direction and the sensed angle during the synchronous upward movement.

As described above, the instruction direction (the magnetic field direction) is gradually changed by switching between N excitation patterns. Upper part of FIG. 11 illustrates one cycle of the instruction direction defined by N excitation patterns, which is expressed by a circle. In the circle in FIG. 11, a change of the instruction direction in the counterclockwise direction by an excitation pattern corresponds to upward rotation of the rotor 60, and a change of the instruction direction in the clockwise direction corresponds to downward rotation of the rotor 60.

When the excitation pattern is changed by one step, the instruction direction A (the magnetic field direction) of the coils 73 changes, which applies a rotational driving force corresponding to u1 degrees to the rotor 60. In the present embodiment, when the excitation pattern is changed by N steps (one cycle), the rotor 60 rotates by F degrees. When the excitation pattern is changed by (360/F) cycle, the rotor 60 makes one rotation. The upper part of FIG. 11 conceptually illustrates the relation between the instruction direction A (the direction of the magnetic field produced by the coils 73) and the sensed angle B (the direction of the rotor 60).

In a case of F=360, for example, when the excitation pattern is changed by N steps (one cycle), the rotor 60 makes one rotation (rotates 360 degrees). In this case, each time the excitation pattern is changed by one step, the rotor 60 rotates (360/N) degrees. A change by N steps results in rotation of the rotor 60 by 360 degrees.

In a case of F=180, when the excitation pattern is changed by N steps (one cycle), the rotor 60 makes half a rotation (rotates 180 degrees). In this case, each time the excitation pattern is changed by one step, the rotor 60 rotates (180/N) degrees. A change by N steps results in rotation of the rotor 60 by 180 degrees. After the excitation pattern is changed by N steps in a given direction, which causes the rotor 60 to make half a rotation, the excitation pattern is changed by N steps again in the same direction, which causes the rotor 60 to further make half a rotation. Thus, by changing the excitation pattern by two cycles in the same direction, a rotational driving force corresponding to one rotation can be applied to the rotor 60. In this manner, the cycle of the excitation pattern and the cycle of the rotor 60 need not be equal to each other.

Upon receiving the initialization command, the rotation control unit 218 provides instruction on a predetermined excitation pattern to the rotation instructing unit 214, and the rotation instructing unit 214 causes driving currents to flow in accordance with the excitation pattern. Typically, when a car air conditioner is powered on, the initialization command is transmitted to the motor operated valve control device 200.

When an excitation pattern is set, a magnetic field in a predetermined direction is produced from the coils 73, by which the instruction direction A (the magnetic field direction from the coils 73) is set. A rotational driving force is applied to the rotor 60 by the magnetic force of the coils 73. Thus, the sensed angle B (the direction of the rotor 60) changes toward the instruction direction A (the magnetic field direction indicated by the excitation pattern). The sensed angle B may readily correspond to the instruction direction A immediately after the excitation pattern is set; when the difference between the sensed angle B and the instruction direction A is too large, however, the sensed angle B is drawn toward the instruction direction A but may not reach the instruction direction.

The rotation control unit 218 gradually changes the instruction direction A by switching the excitation pattern by one step at a time in the upward direction. In FIG. 11, because the sensed angle B is on an upper side of the instruction direction A, the sensed angle B is drawn in the downward direction.

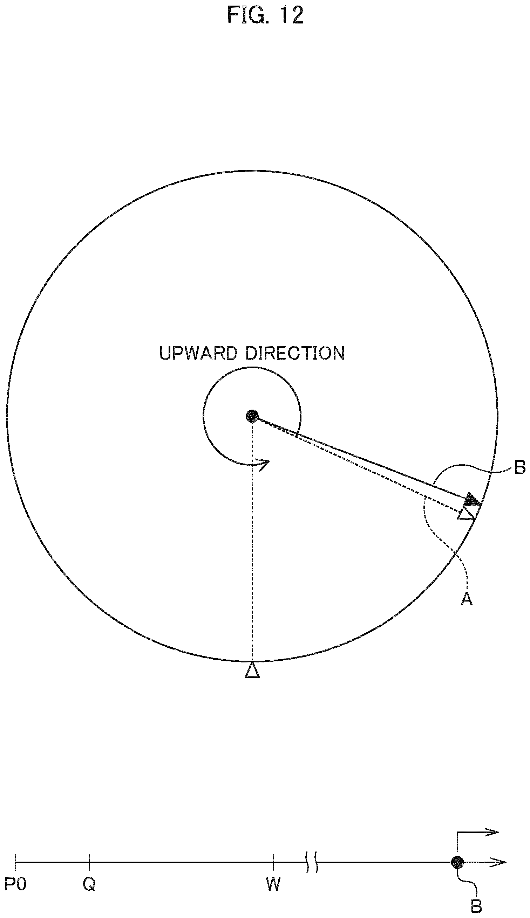

FIG. 12 is a second conceptual diagram illustrating the relation between the instruction direction and the sensed angle during the synchronous upward movement.

The rotation control unit 218 moves the instruction direction A by N steps (one cycle) in the upward direction. As the rotor 60 is drawn toward the instruction direction A, the instruction direction A and the sensed angle B become synchronous in due course. FIG. 12 shows a point when the instruction direction A and the sensed angle B are synchronized. Once the instruction A and the sensed angle B are synchronized, the rotor 60 rotates upward by u1 degrees in synchronization with moving of the instruction direction A by one step in the upward direction.

FIG. 13 is a flowchart illustrating processes in the origin searching process in S12 of FIG. 10.

After a motor operated valve 1 is manufactured, the origin check is performed in a factory, and the origin information, which is data specific to the motor operated valve 1, is recorded in the reference information storage unit 206. The origin searching process is performed with reference to the origin information. The rotation control unit 218 rotates the rotor 60 to detect the angle value. Hereinafter, the angle value registered as the origin information will be referred to as "reference angle value", and a detected angle value of the rotor 60 will be referred to as a "current angle value". When the reference angle value and the current angle value are close to each other, the rotation control unit 218 determines that the rotor 60 is near the origin. As illustrated in FIG. 7, however, the current angle value is also equal to the reference angle value at the false origins P1, P2, P3, and P4. Thus, the origin P0 cannot be located on the basis of the origin information alone.

The rotation control unit 218 causes the rotor 60 to rotate downward. When the reference angle value has become close to the current angle value, the rotation control unit 218 lowers the rotating speed of the rotor 60. This is to reduce impact noise, which is produce at the true origin P0, by lowering the speed of the rotor 60. Because the rotor 60 can continue rotating downward near a false origin, the difference between the reference angle value and the current angle value gradually increases. When the difference between the reference angle value and the current angle value is large, the rotation control unit 218 returns the rotating speed of the rotor 60 to the original speed or increases the rotating speed. When the rotor 60 has reached the true origin P0, however, the stopper 90 stops the rotation, and thus, the sensed angle no longer follows the instruction direction indicated by the excitation pattern. When such a phenomenon occurs, the rotation control unit 218 determines that the rotor 60 has reached the origin P0.

At the start of the origin searching process, the instruction direction and the sensed angle are synchronous. In this state, the rotation control unit 218 first resets a counter value C to "0" (S20). The counter value C is a variable provided for determination of an origin candidate. Subsequently, the rotation control unit 218 sets the downward rotation speed of the rotor 60 to a rotating speed V1 (S22).

The rotation control unit 218 rotates the rotor 60 downward at a constant rate at the rotating speed V1. The rotation instructing unit 214 rotates the rotor 60 downward by one step (S24). The magnetic sensor 119 detects the sensed angle, and the rotation detecting unit 216 calculates the angle value (0 to TA) from the sensor value output from the magnetic sensor 119. The rotation control unit 218 determines whether or not a difference D (absolute value) between the reference angle value and the current angle value is smaller than a predetermined threshold T1

(S26). When the difference D is not smaller than the threshold T1 (N in S26), that is, when the rotor 60 is neither near the true origin nor near a false origin, the rotating speed is V1 (high) (S28). Note that the threshold T1 may be freely set.

When the difference D smaller than the threshold T1 (Y in S26), that is, when the rotor 60 is near the true origin P0 or a false origin P1, P2, P3, or P4, the rotation control unit 218 sets the rotating speed to V2 (S30). V2 is smaller than V1 (V2 < V1). The rotating speed is lowered in order to reduce impact noise in case the current position is near the true origin P0.

In response to the instruction on downward rotation by one step, the rotation detecting unit 216 calculates an actual rotation change amount a of the sensor magnet 106. Normally, for an instruction on rotation by one step, a rotation change amount a of u1 degrees is estimated as described above. The rotation control unit 218 determines whether or not the rotation change amount a is smaller than a threshold T2 (S32). In other words, the rotation control unit 218 determines whether or not a ratio (following capability) of a change amount (rotation amount) of the sensed angle to that of the instruction direction is smaller than a predetermined threshold. The threshold T2 may be freely set, and may be set to about 0.3×u1 to 0.7×u1 degrees, for example.

When the rotation change amount a is smaller than the threshold T2, there is a possibility that the rotor 60 has reached the origin and is subjected to rotation restriction. Alternatively, the rotor 60 may be temporarily subjected to rotation restriction owing to a foreign material such as metal waste. In any case, the following capability of the rotor 60 is lowered for some reason. When the rotation change amount a is smaller than the threshold T2 in this manner, the rotor 60 may be close to the true origin P0, but it remains possible that the following capability of the rotor 60 is temporarily lowered at a position other than the true origin P0.

When the rotation change amount a is equal to or larger than the threshold T2 (N in S32), that is, when the following capability of the rotor 60 is sufficient, the rotation control unit 218 resets the counter value C to "0" (S34). The rotation control unit 218 also clear latest origin information HP, which will be described later if the latest origin information HP is saved (S36). Thereafter, the process returns to S24, where the rotation control unit 218 provides instruction on downward rotation by one step again.

In contrast, when the rotation change amount a is smaller than the threshold T2 (Y in S32) and the counter value C is 0 (Y in S38), that is, when the rotation change amount a has first become smaller than the threshold T2, the rotation control unit 218 temporarily saves the current angle value and the excitation pattern as the latest origin information HP (S40). Thereafter, the rotation control unit 218 increments the counter value C (S42). When the counter value C is not 0 (N in S38), that is, when the phenomenon that "the rotation change amount a is smaller than the threshold T2 (hereinafter referred to as "detection of decrease in the following capacity") is consecutively detected, the process in S40 is skipped. The latest origin information HP is maintained without any change. As long as the detection of decrease in the following capacity continues, the latest origin information HP is maintained, and the counter value C continues to increase.

When the counter value C is smaller than a threshold K1 (N in S44), the process returns to S24 with the latest origin information HP remaining saved. The threshold K1 is a natural number to be freely set. In contrast, when the counter value C is equal to or larger than the threshold K1, that is, when decrease in the following capacity is detected K1 or more consecutive times (Y in S44), the process moves the resynchronization illustrated in FIG. 10 (S14). In this case, the rotation control unit 218 determines that the rotor 60 has reached the origin P0 at a point when the latest origin information HP is detected. Hereinafter, the angle value included in the latest origin information saved in S40 will be referred to as an "origin angle value", and the excitation pattern included therein will be referred to as an "origin excitation pattern". Normally, the origin information and the latest origin information are the same as each other. Subsequent processes are performed on the basis of the latest origin information.

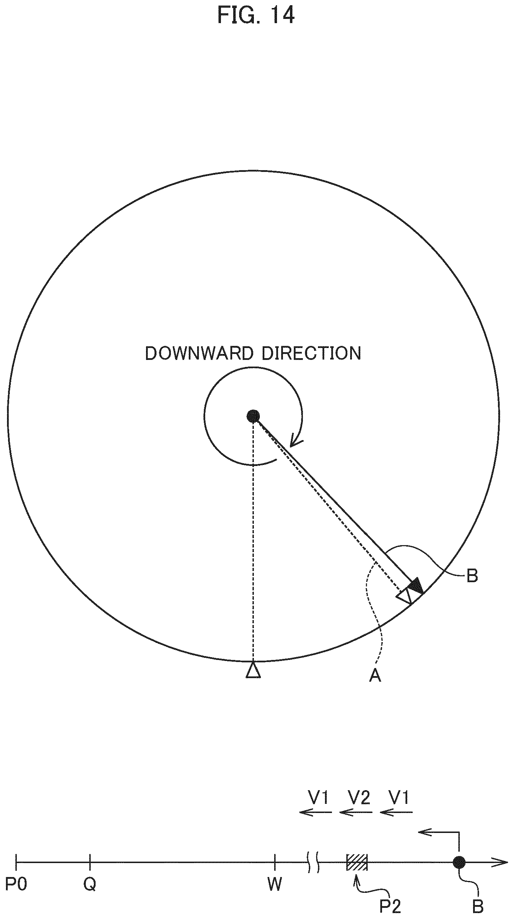

FIG. 14 is a first conceptual diagram illustrating the relation between the instruction direction and the sensed angle during the origin searching process.

After the instruction direction A and the sensed angle B are synchronized by the synchronous upward movement, the rotation control unit 218 rotates the rotor 60 downward by switching the excitation pattern as described with reference to FIG. 13. In the vicinity of a false origin, the rotation control unit 218 lowers the rotating speed of the rotor 60 from V1 to V2. As illustrated in FIG. 14, for example, the rotating speed of the rotor 60 is V2 (low) near the false origin P2, and returns to V1 as the rotor 60 moves away from the false origin P2.

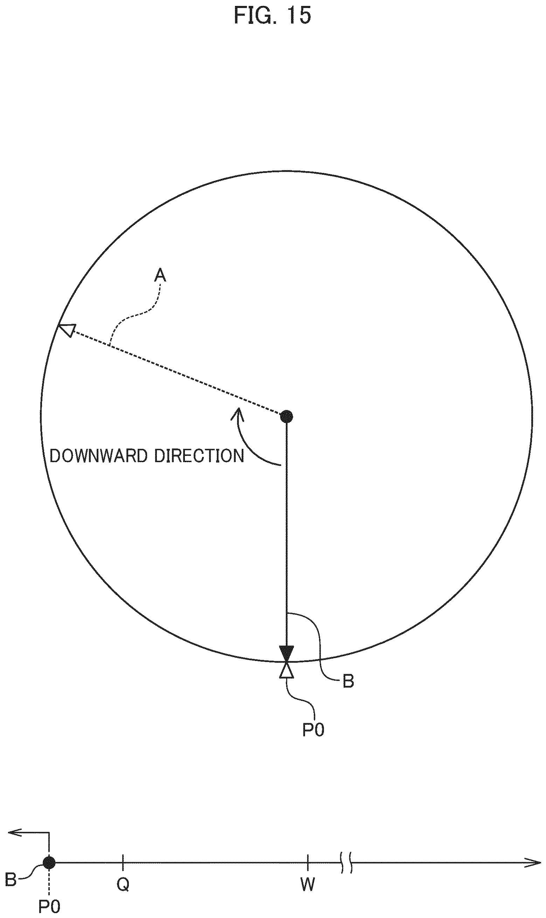

FIG. 15 is a second conceptual diagram illustrating the relation between the instruction direction and the sensed angle during the origin searching process.

When the rotor 60 reaches the true origin P0, the rotor 60 is subjected to rotation restriction. Thus, even if instruction on downward rotation is made by a change in the excitation pattern, the rotor 60 cannot continue the downward rotation any more. The rotation control unit 218 still continues to switch the excitation pattern to the direction of downward rotation. FIG. 15 corresponds to the state of "Y in S44" in FIG. 12. When the rotation restricted state is detected K1 times, this shows that, when the excitation pattern has advanced by K1 steps after the rotor 60 reached the true origin P0, the latest origin information HP corresponds to the true origin P0. Although the instruction direction A moves toward the downward direction, the sensed angle B cannot move toward the downward direction any more. Thus, the rotor 60 once becomes desynchronized as illustrated in FIG. 15.

FIG. 16 is a first conceptual diagram illustrating the relation between the instruction direction and the sensed angle during resynchronization.

Even after the rotor 60 reached the true origin P0, the rotation control unit 218 continues to switch the excitation pattern to the direction of downward rotation. When the instruction direction A has reached the position illustrated in FIG. 16, the instruction direction A is closer to the rotor 60 in the upward direction than in the downward direction, and the rotor 60 thus receives rotational driving force in the upward direction. The rotating direction of the rotor 60 is determined by relative positions of the magnetic field produced by the excitation pattern and the rotor 60.

FIG. 17 is a second conceptual diagram illustrating the relation between the instruction direction and the sensed angle during resynchronization.

The rotation control unit 218 continues to switch the excitation pattern from the true origin P0 in the direction downward rotation by M3 steps. As illustrated in FIG. 16, the rotor 60 receives rotational driving force in the upward direction. In this manner, the excitation pattern is continued to move toward the direction of downward rotation even after the true origin P0 is reached, the sensed angle B relatively approaches the instruction direction A, and the sensed angle B and the instruction direction A correspond to each other (synchronized) again. As described above, the rotation control unit 218 advances the excitation pattern by M3 steps from the origin excitation pattern registered in the latest origin information HP.

Because the movement amount of the instruction direction A from the true origin P0 toward the downward direction is M3 steps, the distance (number of steps) from the true origin P0 to the instruction direction A in the upward direction is "N-M3". The rotation control unit 218 may obtain an angle value at a position reached by upward rotation by "N-M3" steps from the true origin P0 on the basis of the data illustrated in FIG. 7, and check whether the difference between the estimated angle value and the actual angle value of the sensed angle B is within a predetermined threshold. In other words, when the instruction direction A is moved by M3 steps in the downward direction from the true origin P0, the rotation control unit 218 may check whether the instruction direction A and the sensed angle B are actually synchronized, or in other words, whether desynchronization has occurred.

FIG. 18 is a conceptual diagram illustrating the relation between the instruction direction and the sensed angle during initial position setting. As illustrated in FIG. 18, the initial position Q is a position at M1 steps in the upward direction from the origin P0. Because the excitation pattern is N steps per one rotation, the rotation control unit 218 advances the excitation pattern by "N-M3-M1" steps in the downward direction from the state of FIG. 17. As a result of the above-described processes, the rotor 60 reaches the initial position Q.

### [Overview]

The motor operated valve 1, and in particular the motor operated valve control device 200 have been described above on the basis of the embodiment.

The motor operated valve control device 200 lowers the speed of the rotor 60 at a point that can be an origin on the basis of the origin information. This control method prevents a large impact noise from being produced. In addition, after the rotor 60 has passed a false origin, the rotating speed of the rotor 60 is increased again, which shortens the time taken for the origin searching process.

The motor operated valve control device 200 performs the synchronous upward movement before the origin searching process. At the start of the initialization process, the instruction direction is moved in the direction of upward rotation, so that the sensed angle is synchronized with the instruction direction. In addition, the rotor 60 is rotated upward before being rotated downward, which applies moderate vibration to the feed screw mechanism 109 and thus efficiently removes a remaining foreign material, if any.

Furthermore, after making the rotor 60 reach the true origin P0, the motor operated valve control device 200 causes the rotor 60 to be desynchronized, and then temporarily rotates the rotor 60 upward (see FIGS. 16 and 17). The slight upward rotation before downward rotation after the rotor 60 has reached the origin also facilitates removal of a foreign material.

In the present embodiment, the initial position Q is set to a position at M1 steps from the origin P0. At the start of operation of the rotor 60, the rotor 60 may wobble vertically. In a case where the initial position Q is the same as the origin P0, this wobbling may cause impact noise. In addition, the rotor 60 may also wobble owing to vibration of a vehicle. The allowance provided between the initial position Q and the origin P0 prevents or reduces impact noise. In addition, impacts between the stopper 90 and the projection lead to wear of these components, which is unfavorable. The allowance between the initial position Q and the origin P0 reduces wear of the components.

According to the present embodiment, the origin (reference position) can be located by sensing a decrease in the following capability of the rotor 60 by the magnetic sensor 119. The motor operated valve control device 200 can check the following capability of the rotor 60 by causing the rotor 60 to rotate by one step at a time.

In the present embodiment, a position at which the rotation change amount a is smaller than the threshold T2 K1 or more consecutive times is located as the origin. K1 is set to be more than one to reduce the risk of false recognition of a point at which smooth movement of the actuating rod 32 is temporarily obstructed by a foreign material as being the origin. K1 may be an integer of 1 or larger.

### [Modifications]

In the description of the present embodiment, the valve closed position is assumed to be the origin (reference position). In a modification, a valve fully-open position may be set as the reference position. The reference position may be any position to be a reference for driving the actuating rod 32 by the rotor 60. The reference position can be set to any position at which the rotation of the rotor 60 can be stopped by the stopper 90. The initial position (stop position) may be set to the reference position.

In the description of the present embodiment, driving currents to be supplied to the stepping motor are defined by an excitation pattern, and the excitation pattern is switched by one step at a time, so that the rotor 60 is moved by the unit rotation amount each time. In an example not part of the invention, the rotor 60 may be continuously rotated at a constant speed, and the rotation control unit 218 may search for the reference position on the basis of the following capability the sensed angle per unit time.

In the description of the present embodiment, when the reference angle value, which is the angle value included in the origin information, and the current angle value, which is the detected angle value of the rotor 60, are close to each other, the rotation control unit 218 determines that the rotor 60 is near the origin and lowers the rotating speed of the rotor 60. In another embodiment of the invention, the rotation control unit 218 determines whether or not the rotor 60 is near the origin on the basis of the excitation pattern instead of the angle value. First, the step value of the excitation pattern registered as the origin information, that is, the excitation pattern set at the origin will be referred to as a "reference excitation value", and the step value of the excitation pattern actually set for the rotor 60 will be referred to as a "current excitation value". When the reference excitation value is close to the current excitation value, the rotation control unit 218 determines that the rotor 60 is near the origin.

Specifically, the rotation control unit 218 causes the rotor 60 to rotate downward, and determines whether or not the difference DX (absolute value) between the reference excitation value and the current excitation value is smaller than a predetermined threshold TX in S26 of FIG. 13. When the difference DX is smaller than the threshold TX (Y in S26), the rotation control unit 218 sets the rotating speed to V2 (low). In this manner, whether or not the rotor 60 is near the origin may be determined on the basis of the excitation pattern instead of the angle value.

In the description of the present embodiment, the reference position is located when a condition that the rotation change amount a is consecutively smaller than the threshold T2 is met. In a modification, the rotation control unit 218 may locate the reference position when the total number of times the rotation change amount a is detected to be smaller than the threshold T2 is a predetermined number or larger, regardless of whether or not the detections are consecutive.

In the embodiment described above, an example of a structure in which the magnetic sensor 119 faces the sensor magnet 106 along the axial direction has been presented (see FIG. 1). In a modification, the magnetic sensor may be positioned on a lateral side (radially outside) of the sensor magnet. Thus, the magnetic sensor and the sensor magnet may radially face each other. The sensor magnet may be magnetized on the outer circumferential face thereof. The number of poles thereof can be appropriately set, such as two.

In the embodiment described above, an example of a structure in which the rotor magnet 104 and the sensor magnet 106 are separated from each other along the axial direction has been presented. In a modification, the rotor magnet and the sensor magnet may be integrated. In a process of forming the magnet part, the rotor magnet part and a sensor magnet part may be formed integrally. In this case, the area (outer diameter) of the sensor magnet may be increased so that the magnetic sensor can reliably detect magnetic flux. As a result, the sensor magnet sticks out of the outer circumference of the rotor core, which makes injection molding of the sensor magnet and the rotor magnet easier.

In the embodiments, the laminated core (laminated magnetic core) has been presented as an example of the stator core. In a modification, a powder core or other cores may be employed. A powder core is also called a "powder magnetic core", and obtained by reducing a soft magnetic material to powder, kneading powder coated with non-conductive resin or the like and resin binder, and compression molding and heating the kneaded material.

While an example of the structure in which the drive circuit, the control circuit, the communication circuit, and the power supply circuit are mounted on the lower face of the circuit board has been presented in the embodiments, the circuits that are mounted may be changed as appropriate. For example, a drive circuit and a power supply circuit may be mounted thereon, and a control circuit may be provided outside the motor operated valve. Alternatively, the circuits may be mounted on the upper face of the circuit board.

While a PM stepping motor is employed as the motor unit in the embodiments, a hybrid stepping motor may alternatively be employed. In addition, while the motor unit is a three-phase motor in the embodiments, the motor unit may be a motor other than a three-phase motor, such as a two-phase, four-phase, or five-phase motor. The number of electromagnetic coils in the stator is not limited to three or six, but may be appropriately set depending on the number of phases of the motor.

While the motor operated valve of the embodiments is suitably applicable to a refrigeration cycle using an alternative for chlorofluorocarbon (HFC-134a) or the like as the refrigerant, the motor operated valve can also be applied to a refrigeration cycle using a refrigerant with high working pressure, such as carbon dioxide. In this case, an external heat exchanger such as a gas cooler is provided instead of the condenser in the refrigeration cycle.

While the motor operated valve is an expansion valve in the embodiments, the motor operated valve may be an on-off valve or a flow control valve without an expanding function.

While an example in which the motor operated valve is applied to a refrigeration cycle in an automotive air conditioner has been presented in the embodiments, the motor operated valve can also be applied to an air conditioner including a motor operated expansion valve other than those for vehicles. Furthermore, the motor operated valve may be a motor operated valve for controlling a flow of fluid other than refrigerant.

The motor operated valve 1 in the present embodiment can also be applied to various automobiles in addition to electric vehicles.

The sensor magnet 106 may be magnetized with four poles on both faces (magnetized on both faces with two poles on each face). Reverse polarities of the poles on the upper face and the lower face enhance the magnetic flux. In this case, even when the rotor 60 moves in the valve closing direction and the distance between the sensor magnet 106 and the magnetic sensor 119 is increased, the sensitivity of the magnetic sensor 119 can be kept high.

## Claims

1. A motor operated valve control device (200) connected with a motor operated valve (1) comprising a rotor (60) with a rotor core (102), and a magnetic sensor (119), wherein the magnetic sensor (119) faces a sensor magnet (106) provided on an upper end face of the rotor core (102) and detects a rotation angle value of the sensor magnet (106), the motor operated valve control device (200) configured to adjust a valve opening degree by rotating the rotor (60), the motor operated valve control device (200) comprising:
a rotation detecting unit (216) for detecting a rotation angle of the rotor (60) by obtaining the rotation angle value from the magnetic sensor (119); and
a rotation control unit (218) for moving the rotor (60) toward a predetermined stop position (Q) by providing instructions on a rotating speed and a rotating direction of the rotor (60), wherein in control of movement of the rotor (60) to the stop position (Q), the rotation control unit (218) is configured to lower the rotating speed of the rotor (60) when a difference between a reference angle value indicating a rotation angle at a reference position (P0) of the rotor (60) and a detected rotation angle of the rotor (60) is smaller than a first threshold, **characterized in that** the rotation control unit (218) is configured to increase the rotating speed of the rotor (60) after lowering the rotating speed of the rotor (60), when the difference between the detected rotation angle of the rotor (60) and the reference angle value is equal to or larger than the first threshold.

2. The motor operated valve control device (200) according to claim 1, wherein in the motor operated valve, when the rotor reaches the reference position (P0), rotation of the rotor is restricted.

3. The motor operated valve control device (200) according to any one of claims 1 to 2, further comprising:
a receiving unit (210) for receiving an initialization command, wherein
when the initialization command is received, the rotation control unit (218) rotates the rotor (60) in a first direction, so that the rotor (60) reaches the reference position (P0), and then moves the rotor (60) to the stop position (Q), the stop position (Q) being a position reached by rotation by a first rotation amount in a second direction opposite the first direction from the reference position (P0).

4. The motor operated valve control device (200) according to claim 3, wherein
after causing the rotor (60) to reach the reference position (P0), the rotation control unit (218) further instructs the rotor (60) to rotate by a second rotation amount in the first direction to move the rotor to the stop position (Q).

5. The motor operated valve control device (200) according to any one of claims 1 to 4, wherein
when moving the rotor (60) to the stop position (Q), the rotation control unit (218) rotates the rotor in a direction opposite a direction toward the stop position (Q) by a third rotation amount, and then rotates the rotor (60) in the direction toward the stop position (Q).

6. The motor operated valve control device (200) according to any one of claims 1 to 5, wherein
the rotation detecting unit (216) detects a rotation angle of the rotor (60) each time an instruction on a unit rotation amount of the rotor (60) is provided, and
the rotation control unit (218) detects a rotation amount of the rotor on the basis of the detected rotation angle, and determines a timing at which the rotor has reached the reference position when a condition that a state in which a ratio of the detected rotation amount to the unit rotation amount is equal to or smaller than a second threshold is detected a predetermined number of times or more times is met.

7. A motor operated valve control program comprising instructions which, when the program is implemented by a computer, cause the computer to implement:
a function of detecting a rotation angle of a rotor (60) of a motor operated valve (1) comprising a rotor (60) with a rotor core (102) and a magnetic sensor (119), wherein the magnetic sensor (119) faces a sensor magnet (106) provided on an upper end face of the rotor core (102) and detects a rotation angle value of the sensor magnet (106), wherein the rotation angle of the rotor (60) is detected by obtaining the rotation angle value from the magnetic sensor (119);
a function of moving the rotor (60) toward a predetermined stop position by providing instructions on a rotating speed and a rotating direction of the rotor (60);
a function of lowering the rotating speed of the rotor (60) when a difference between a reference angle value indicating a rotation angle at a reference position (P0) of the rotor (60) and a detected rotation angle of the rotor (60) is smaller than a first threshold in control of movement of the rotor (60) to the stop position, **characterized in that** after lowering the rotating speed of the rotor (60), the rotating speed of the rotor (60) is increased when the difference between the detected rotation angle of the rotor (60) and the reference angle value is equal to or larger than the first threshold.

8. A motor operated valve control device (200) connected with a motor operated valve (1) comprising a rotor (60) with a rotor core (102), and a magnetic sensor (119), wherein the magnetic sensor (119) faces a sensor magnet (106) provided on an upper end face of the rotor core (102) and detects a rotation angle value of the sensor magnet (106), the motor operated valve control device (200) being configured to adjust a valve opening degree by rotating the rotor (60), the motor operated valve control device (200) comprising:
a rotation detecting unit (216) for detecting a rotation angle of the rotor (60) by obtaining the rotation angle value from the magnetic sensor (119); and
a rotation control unit (218) for providing instructions on a rotating speed and a rotating direction of the rotor (60) by setting an excitation pattern, to move the rotor (60) toward a predetermined stop position, wherein in control of movement of the rotor (60) to the stop position (Q), the rotation control unit (218) is configured to lower the rotating speed of the rotor (60) when a difference between a step value of an excitation pattern at a reference position (P0) and an excitation pattern set for the rotor is smaller than a predetermined threshold, **characterized in that** the rotation control unit (218) is configured to increase the rotating speed of the rotor (60) after lowering the rotating speed of the rotor (60) when the difference between the step value of the excitation pattern at a reference position (P0) and the excitation pattern set for the rotor is larger than the predetermined threshold.

## Patentansprüche

1. Motorbetätigte Ventilsteuervorrichtung (200), die mit einem motorbetätigten Ventil (1) verbunden ist, das einen Rotor (60) mit einem Rotorkern (102) und einen Magnetsensor (119) umfasst, wobei der Magnetsensor (119) einem Sensormagneten (106) gegenüberliegt, der an einer oberen Endfläche des Rotorkerns (102) vorgesehen ist, und einen Drehwinkelwert des Sensormagneten (106) erfasst, wobei die motorbetätigte Ventilsteuervorrichtung (200) so konfiguriert oder ausgebildet ist, dass sie einen Ventilöffnungsgrad durch Drehen des Rotors (60) einstellt, wobei die motorbetätigte Ventilsteuervorrichtung (200) umfasst:
eine Rotationserfassungseinheit (216) zum Erfassen eines Rotationswinkels des Rotors (60) durch Erhalten des Rotationswinkelwertes von dem Magnetsensor (119); und
eine Rotationssteuereinheit (218) zum Bewegen des Rotors (60) in Richtung einer vorbestimmten Stopp-Position (Q) durch Bereitstellen von Anweisungen zu einer Rotationsgeschwindigkeit und einer Rotationsrichtung des Rotors (60), wobei bei der Steuerung der Bewegung des Rotors (60) zu der Stopp-Position (Q) die Rotationssteuereinheit (218) konfiguriert oder ausgebildet ist, um die Rotationsgeschwindigkeit des Rotors (60) zu verringern, wenn eine Differenz zwischen einem Referenzwinkelwert, der einen Rotationswinkel an einer Referenzposition (P0) des Rotors (60) anzeigt, und einem erfassten Rotationswinkel des Rotors (60) kleiner als ein erster Schwellenwert ist, **dadurch gekennzeichnet, dass** die Steuereinheit (218) für die Drehung konfiguriert oder ausgebildet ist, um die Drehgeschwindigkeit des Rotors (60) nach dem Absenken der Drehgeschwindigkeit des Rotors (60) zu erhöhen, wenn die Differenz zwischen dem erfassten Drehwinkel des Rotors (60) und dem Referenzwinkelwert gleich oder größer als der erste Schwellenwert ist.

2. Motorbetriebene Ventilsteuervorrichtung (200) nach Anspruch 1, wobei in der motorbetriebenen Armatur, wenn der Rotor die Referenzposition (P0) erreicht, die Drehung des Rotors eingeschränkt wird.

3. Motorbetriebene Ventilsteuervorrichtung (200) nach einem der Ansprüche 1 bis 2, ferner umfassend:
eine Empfangseinheit (210) zum Empfangen eines Initialisierungsbefehls, wobei
wenn der Initialisierungsbefehl empfangen wird, die Steuereinheit (218) den Rotor (60) in einer ersten Richtung dreht, so dass der Rotor (60) die Referenzposition (P0) erreicht, und dann den Rotor (60) in die Stopp-Position (Q) bewegt, wobei die Stopp-Position (Q) eine Position ist, die durch Drehung um einen ersten Drehbetrag in einer zweiten Richtung entgegengesetzt zur ersten Richtung von der Referenzposition (P0) erreicht wird.

4. Motorbetriebene Ventilsteuervorrichtung (200) nach Anspruch 3, wobei
nachdem sie den Rotor (60) veranlasst hat, die Referenzposition (P0) zu erreichen, die Steuereinheit (218) den Rotor (60) ferner anweist, sich um einen zweiten Drehbetrag in der ersten Richtung zu drehen, um den Rotor in die Stopp-Position (Q) zu bewegen.

5. Motorbetriebene Ventilsteuervorrichtung (200) nach einem der Ansprüche 1 bis 4, wobei
wenn der Rotor (60) in die Position (Q) zum Anhalten bewegt wird, die Steuereinheit (218) für die Drehung den Rotor in einer Richtung entgegengesetzt zu einer Richtung in Richtung der Position (Q) zum Anhalten um einen dritten Drehungsbetrag dreht, und dann den Rotor (60) in der Richtung in Richtung der Position (Q) zum Anhalten dreht.

6. Motorbetriebene Ventilsteuervorrichtung (200) nach einem der Ansprüche 1 bis 5, wobei
die Rotationserfassungseinheit (216) einen Rotationswinkel des Rotors (60) jedes Mal erfasst, wenn eine Anweisung über einen Einheitsrotationsbetrag des Rotors (60) bereitgestellt wird, und
die Steuereinheit (218) für die Rotation einen Rotationsbetrag des Rotors auf der Grundlage des erfassten Rotationswinkels erfasst und einen Zeitpunkt bestimmt, zu dem der Rotor die Referenzposition erreicht hat, wenn eine Bedingung erfüllt ist, dass ein Zustand, in dem ein Verhältnis des erfassten Rotationsbetrags zu dem Einheitsrotationsbetrag gleich oder kleiner als ein zweiter Schwellenwert ist, eine vorbestimmte Anzahl von Malen oder öfters erfasst wird.

7. Ein motorbetriebenes Ventilsteuerungsprogramm, das Anweisungen enthält, die, wenn das Programm von einem Computer implementiert wird, den Computer veranlassen, Folgendes zu implementieren:
eine Funktion zum Erfassen eines Drehwinkels eines Rotors (60) eines motorbetriebenen Ventils (1), das einen Rotor (60) mit einem Rotorkern (102) und einem Magnetsensor (119) umfasst, wobei der Magnetsensor (119) einem Sensormagneten (106) gegenüberliegt, der an einer oberen Endfläche des Rotorkerns (102) vorgesehen ist, und einen Drehwinkelwert des Sensormagneten (106) erfasst, wobei der Drehwinkel des Rotors (60) erfasst wird, indem der Drehwinkelwert von dem Magnetsensor (119) erhalten wird;
eine Funktion zum Bewegen des Rotors (60) in Richtung einer vorbestimmten Position, indem Anweisungen für eine Drehgeschwindigkeit und eine Drehrichtung des Rotors (60) gegeben werden;
eine Funktion zum Absenken der Drehgeschwindigkeit des Rotors (60), wenn eine Differenz zwischen einem Referenzwinkelwert, der einen Drehwinkel an einer Referenzposition (P0) des Rotors (60) anzeigt, und einem erfassten Drehwinkel des Rotors (60) kleiner als ein erster Schwellenwert bei der Steuerung der Bewegung des Rotors (60) in die Stopp-Position ist, **dadurch gekennzeichnet, dass** nach dem Absenken der Drehgeschwindigkeit des Rotors (60) die Drehgeschwindigkeit des Rotors (60) erhöht wird, wenn die Differenz zwischen dem erfassten Drehwinkel des Rotors (60) und dem Referenzwinkelwert gleich oder größer als der erste Schwellenwert ist.

8. Motorbetätigte Ventilsteuervorrichtung (200), die mit einem motorbetätigten Ventil (1) verbunden ist, das einen Rotor (60) mit einem Rotorkern (102) und einen Magnetsensor (119) umfasst, wobei der Magnetsensor (119) einem Sensormagneten (106) gegenüberliegt, der an einer oberen Endfläche des Rotorkerns (102) vorgesehen ist, und einen Drehwinkelwert des Sensormagneten (106) erfasst, wobei die motorbetätigte Ventilsteuervorrichtung (200) so konfiguriert oder ausgebildet ist, dass sie einen Ventilöffnungsgrad durch Drehen des Rotors (60) einstellt, wobei die motorbetätigte Ventilsteuervorrichtung (200) umfasst:
eine Rotationserfassungseinheit (216) zum Erfassen eines Rotationswinkels des Rotors (60) durch Erhalten des Rotationswinkelwertes von dem Magnetsensor (119); und
eine Rotationssteuereinheit (218) zum Bereitstellen von Anweisungen für eine Drehgeschwindigkeit und eine Drehrichtung des Rotors (60) durch Einstellen eines Erregungsmusters , um den Rotor (60) in Richtung einer vorbestimmten Stopp-Position zu bewegen, wobei bei der Steuerung der Bewegung des Rotors (60) zu der Stopp-Position (Q) die Rotationssteuereinheit (218) so konfiguriert ist, dass sie die Drehgeschwindigkeit des Rotors (60) verringert, wenn eine Differenz zwischen einem Schrittwert eines Erregungsmusters an einer Referenzposition (P0) und einem für den Rotor eingestellten Erregungsmuster kleiner als ein vorbestimmter Schwellenwert ist, **dadurch gekennzeichnet, dass** die Steuereinheit (218) so konfiguriert oder ausgebildet ist, dass sie die Drehgeschwindigkeit des Rotors (60) nach dem Absenken der Drehgeschwindigkeit des Rotors (60) erhöht, wenn die Differenz zwischen dem Schrittwert des Erregungsmusters an einer Referenzposition (P0) und dem für den Rotor eingestellten Erregungsmuster größer als der vorbestimmte Schwellenwert ist.

## Revendications

1. Dispositif de commande de vanne motorisée (200) connecté à une vanne motorisée (1) comprenant un rotor (60) avec un noyau de rotor (102), et un capteur magnétique (119), dans lequel le capteur magnétique (119) fait face à un aimant de capteur (106) fourni sur une face d'extrémité supérieure du noyau de rotor (102) et détecte une valeur d'angle de rotation de l'aimant de capteur (106), le dispositif de commande de vanne motorisée (200) configuré pour ajuster un degré d'ouverture de vanne en faisant tourner le rotor (60), le dispositif de commande de vanne motorisée (200) comprenant :
une unité de détection de la rotation (216) pour détecter un angle de rotation du rotor (60) en obtenant la valeur de l'angle de rotation à partir du capteur magnétique (119) ; et
une unité de commande de rotation (218) pour déplacer le rotor (60) vers une position d'arrêt prédéterminée (Q) en fournissant des instructions sur une vitesse de rotation et un sens de rotation du rotor (60), dans laquelle, dans la commande du mouvement du rotor (60) vers la position d'arrêt (Q), l'unité de commande de rotation (218) est configurée pour réduire la vitesse de rotation du rotor (60) lorsqu'une différence entre une valeur d'angle de référence indiquant un angle de rotation à une position de référence (P0) du rotor (60) et un angle de rotation détecté du rotor (60) est plus petite qu'un premier seuil, **caractérisé en ce que** l'unité de contrôle de la rotation (218) est configurée pour augmenter la vitesse de rotation du rotor (60) après avoir réduit la vitesse de rotation du rotor (60), lorsque la différence entre l'angle de rotation détecté du rotor (60) et la valeur de l'angle de référence est égale ou supérieure au premier seuil.

2. Dispositif de commande de vanne motorisée (200) selon la revendication 1,
dans lequel
dans la vanne motorisée, lorsque le rotor atteint la position de référence (P0), la rotation du rotor est restreinte.

3. Le dispositif de commande de vanne motorisée (200) selon l'une quelconque des revendications 1 à 2, comprenant en outre :
une unité de réception (210) pour recevoir une commande d'initialisation, dans laquelle
lorsque la commande d'initialisation est reçue, l'unité de commande de rotation (218) fait tourner le rotor (60) dans un premier sens, de sorte que le rotor (60) atteigne la position de référence (P0), puis déplace le rotor (60) vers la position d'arrêt (Q), la position d'arrêt (Q) étant une position atteinte par une rotation d'une première quantité de rotation dans un second sens opposé au premier sens à partir de la position de référence (P0).

4. Dispositif de commande de vanne motorisée (200) selon la revendication 3,
dans lequel
après avoir amené le rotor (60) à atteindre la position de référence (P0), l'unité de commande de rotation (218) ordonne en outre au rotor (60) de tourner d'une deuxième quantité de rotation dans la première direction pour amener le rotor à la position d'arrêt (Q).

5. Dispositif de commande de vanne motorisée (200) selon l'une des revendications 1 à 4, dans lequel
lors du déplacement du rotor (60) vers la position d'arrêt (Q), l'unité de contrôle de la rotation (218) fait tourner le rotor dans une direction opposée à la direction vers la position d'arrêt (Q) d'une troisième quantité de rotation, puis fait tourner le rotor (60) dans la direction vers la position d'arrêt (Q).

6. Dispositif de commande de vanne motorisée (200) selon l'une des revendications 1 à 5, dans lequel
l'unité de détection de la rotation (216) détecte un angle de rotation du rotor (60) chaque fois qu'une instruction sur une unité de rotation du rotor (60) est fournie, et
l'unité de contrôle de la rotation (218) détecte une quantité de rotation du rotor sur la base de l'angle de rotation détecté, et détermine le moment où le rotor a atteint la position de référence lorsque la condition selon laquelle un état dans lequel un rapport entre la quantité de rotation détectée et la quantité de rotation unitaire est égal ou inférieur à un deuxième seuil est détecté un nombre prédéterminé de fois ou plus est remplie.

7. Programme de commande d'une vanne motorisée comprenant des instructions qui, lorsque le programme est mis en œuvre par un ordinateur, amènent l'ordinateur à mettre en œuvre :
une fonction de détection d'un angle de rotation d'un rotor (60) d'une vanne motorisée (1) comprenant un rotor (60) avec un noyau de rotor (102) et un capteur magnétique (119), dans lequel le capteur magnétique (119) fait face à un aimant de capteur (106) fourni sur une face d'extrémité supérieure du noyau de rotor (102) et détecte une valeur d'angle de rotation de l'aimant de capteur (106), dans lequel l'angle de rotation du rotor (60) est détecté en obtenant la valeur d'angle de rotation à partir du capteur magnétique (119) ;
une fonction de déplacement du rotor (60) vers une position d'arrêt prédéterminée en fournissant des instructions sur une vitesse de rotation et un sens de rotation du rotor (60) ;
une fonction de réduction de la vitesse de rotation du rotor (60) lorsqu'une différence entre une valeur d'angle de référence indiquant un angle de rotation à une position de référence (P0) du rotor (60) et un angle de rotation détecté du rotor (60) est inférieure à un premier seuil dans la commande du mouvement du rotor (60) vers la position d'arrêt, **caractérisée en ce qu'**après avoir réduit la vitesse de rotation du rotor (60), la vitesse de rotation du rotor (60) est augmentée lorsque la différence entre l'angle de rotation détecté du rotor (60) et la valeur de l'angle de référence est égale ou supérieure au premier seuil.

8. Dispositif de commande de vanne motorisée (200) connecté à une vanne motorisée (1) comprenant un rotor (60) avec un noyau de rotor (102), et un capteur magnétique (119), dans lequel le capteur magnétique (119) fait face à un aimant de capteur (106) fourni sur une face d'extrémité supérieure du noyau de rotor (102) et détecte une valeur d'angle de rotation de l'aimant de capteur (106), le dispositif de commande de vanne motorisée (200) étant configuré pour ajuster un degré d'ouverture de vanne en faisant tourner le rotor (60), le dispositif de commande de vanne motorisée (200) comprenant :
une unité de détection de la rotation (216) pour détecter un angle de rotation du rotor (60) en obtenant la valeur de l'angle de rotation à partir du capteur magnétique (119) ; et
une unité de commande de rotation (218) pour fournir des instructions sur une vitesse de rotation et un sens de rotation du rotor (60) en définissant un modèle d'excitation , pour déplacer le rotor (60) vers une position d'arrêt prédéterminée, dans laquelle, dans la commande du mouvement du rotor (60) vers la position d'arrêt (Q), l'unité de commande de rotation (218) est configurée pour réduire la vitesse de rotation du rotor (60) lorsqu'une différence entre une valeur de pas d'un modèle d'excitation à une position de référence (P0) et un modèle d'excitation défini pour le rotor est plus petite qu'un seuil prédéterminé, **caractérisé par le fait que** l'unité de commande de rotation (218) est configurée pour augmenter la vitesse de rotation du rotor (60) après avoir réduit la vitesse de rotation du rotor (60) lorsque la différence entre la valeur de pas du modèle d'excitation à une position de référence (P0) et le modèle d'excitation défini pour le rotor est supérieure au seuil prédéterminé.
